# EUROPEAN PATENT APPLICATION

(11) **EP 2 988 199 A1**
(43) Date of publication of application: **24.02.2016**
(21) Application number: 14864841.3
(22) Date of filing: 19.11.2014
(51) Int. Cl.: G06F 3/0487

(54) **CLICKING CONTROL METHOD AND TERMINAL**

(30) Priority: 22.11.2013 CN 201310596745
(71) Applicant: Huawei Device Co., Ltd., Shenzhen, Guangdong 518129 (CN)
(72) Inventor: YIN, Hang, Shenzhen Guangdong 518129 (CN); JIANG, Jianhui, Shenzhen Guangdong 518129 (CN); GUO, Zejin, Shenzhen Guangdong 518129 (CN); GUAN, Yimai, Shenzhen Guangdong 518129 (CN); WU, Gang, Shenzhen Guangdong 518129 (CN); HE, Liping, Shenzhen Guangdong 518129 (CN); WANG, Ting, Shenzhen Guangdong 518129 (CN); WU, Hao, Shenzhen Guangdong 518129 (CN); PAN, Yi, Shenzhen Guangdong 518129 (CN); CHEN, Xu, Shenzhen Guangdong 518129 (CN); XU, Jie, Shenzhen Guangdong 518129 (CN); WANG, Jin, Shenzhen Guangdong 518129 (CN); LUO, Zhihua, Shenzhen Guangdong 518129 (CN); WU, Bin, Shenzhen Guangdong 518129 (CN); ZHANG, Huimin, Shenzhen Guangdong 518129 (CN); HE, Feng, Shenzhen Guangdong 518129 (CN); ZHOU, Ping, Shenzhen Guangdong 518129 (CN)
(74) Representative: Maiwald Patentanwalts GmbH
(86) International application number: PCT/CN2014/091675
(87) International publication number: WO 2015/074567

(57) **Abstract**

Embodiments of the present invention disclose a tapping control method and a terminal, which relate to the communications field and can avoid frequent automatic setting of the terminal caused by an unconscious operation of a user, thereby implementing accurate operation control on the terminal and improving a capability of the terminal to interact with the user. A specific solution is as follows: The terminal detects a tapping trigger signal within a preset frequency range by using a shock sensor; after the tapping trigger signal is detected, identifies a tapping action type corresponding to the tapping trigger signal; acquires a tapping response event that matches the identified tapping action type; and executes the tapping response event. The present invention can be used in a process of operation control on the terminal.

## Description

This application claims priority to Chinese Patent Application No. 201310596745.4, filed with the Chinese Patent Office on November 22, 2013 and entitled "TAPPING CONTROL METHOD AND TERMINAL", which is incorporated herein by reference in its entirety.

### TECHNICAL FIELD

The present invention relates to the communications field, and in particular, to a tapping control method and a terminal.

### BACKGROUND

With the development of science and technology, an input manner of a terminal is no longer limited to keypad inputting, and touchscreen inputting and motion sensing inputting are increasingly applied in a terminal using process.

Specifically, the motion sensing inputting means that a motion sensor (for example, a G-Sensor) built in a terminal is mainly used to sense a change of a motion status of the terminal and transmit a detected signal of the change of the motion status of the terminal to a microprocessor control unit (Microprocessor Control Unit, MCU) of the terminal, and then the MCU may perform corresponding setting, such as muting a mobile phone or adjusting volume and screen brightness of a mobile phone, on the terminal according to a specific change of the motion status of the terminal sensed by the motion sensor.

The motion sensor (for example, a G-Sensor) is generally used to detect a low-frequency signal, that is, a low-frequency accelerated motion of a terminal, where the low frequency is mainly between 50 HZ and 200 HZ. Low-frequency accelerated motions of the terminal may include flip of the terminal by a user, shaking of the terminal by a user, and the like.

An existing problem is as follows: When a terminal enables G-Sensor inputting to perform setting on the terminal, an unconscious operation, such as shaking of a handheld terminal while a user is walking or frequent flips of a mobile phone when a user is exercising, is likely to cause frequent automatic setting of the terminal and further affects the user's normal use of the terminal, resulting in poor user experience. For example, the terminal may mute the mobile phone according to an unconscious shaking operation in the walking process of the user, and consequently, the user may miss an incoming call. The terminal has a poor capability to interact with the user.

### SUMMARY

Embodiments of the present invention provide a tapping control method and a terminal, which can implement accurate operation control on the terminal and improve a capability of the terminal to interact with a user.

To achieve the foregoing objectives, the embodiments of the present invention use the following technical solutions:

A first aspect of the embodiments of the present invention provides a tapping control method, which may be applied to a terminal, where the terminal includes a shock sensor, and the method includes:
detecting, by using the shock sensor, a tapping trigger signal within a preset frequency range;
after the tapping trigger signal is detected, identifying a tapping action type corresponding to the tapping trigger signal;
acquiring a tapping response event that matches the identified tapping action type; and
executing the tapping response event.

With reference to the first aspect, in a possible implementation manner, after the tapping trigger signal is detected, the method further includes:
acquiring current status information of the terminal; and
the acquiring a tapping response event that matches the identified tapping action type includes:
   searching for a tapping response event that matches the identified tapping action type and matches the acquired current status information.

With reference to the first aspect and the foregoing possible implementation manner, in another possible implementation manner, after the tapping trigger signal is detected, the method further includes:
acquiring trigger position information of the tapping trigger signal that is detected by using the shock sensor; and
the acquiring a tapping response event that matches the identified tapping action type includes:
   searching for a tapping response event that matches the identified tapping action type and matches the acquired trigger position information.

With reference to the first aspect and any one of the foregoing possible implementation manners, in another possible implementation manner, after the tapping trigger signal is detected, the method further includes:
acquiring current status information of the terminal and trigger position information of the tapping trigger signal that is detected by the shock sensor; and
the acquiring a tapping response event that matches the identified tapping action type includes:
   searching for a tapping response event that matches the identified tapping action type and matches the acquired current status information and the acquired trigger position information.

With reference to the first aspect and any one of the foregoing possible implementation manners, in another possible implementation manner, the tapping action type includes: a single tap within a preset time, double taps within a preset time, or at least three taps within a preset time.

With reference to the first aspect and any one of the foregoing possible implementation manners, in another possible implementation manner, if it is identified that the tapping action type is the at least three taps within the preset time, after the tapping action type corresponding to the tapping trigger signal is identified, the method further includes:
acquiring tapping frequency information of the at least three taps within the preset time that are detected by the shock sensor; and
the acquiring a tapping response event that matches the identified tapping action type includes:
   searching for a tapping response event that matches the at least three taps within the preset time and matches the acquired tapping frequency information.

With reference to the first aspect and any one of the foregoing possible implementation manners, in another possible implementation manner, if it is identified that the tapping action type is the at least three taps within the preset time, after the tapping action type corresponding to the tapping trigger signal is identified, the method further includes:
acquiring tapping frequency information of the at least three taps within the preset time that are detected by the shock sensor and current status information of the terminal; and
the acquiring a tapping response event that matches the identified tapping action type includes:
   searching for a tapping response event that matches the at least three taps within the preset time and matches the acquired tapping frequency information and the acquired current status information.

With reference to the first aspect and any one of the foregoing possible implementation manners, in another possible implementation manner, if it is identified that the tapping action type is the al least three taps within the preset time, after the tapping action type corresponding to the tapping trigger signal is identified, the method further includes:
acquiring tapping frequency information of the at least three taps within the preset time that are detected by the shock sensor and trigger position information of the tapping trigger signal that is detected by using the shock sensor; and
the acquiring a tapping response event that matches the identified tapping action type includes:
   searching for a tapping response event that matches the at least three taps within the preset time and matches the acquired tapping frequency information and the acquired trigger position information.

With reference to the first aspect and any one of the foregoing possible implementation manners, in another possible implementation manner, if it is identified that the tapping action type is the at least three taps within the preset time, after the tapping action type corresponding to the tapping trigger signal is identified, the method further includes:
acquiring tapping frequency information of the at least three taps within the preset time that are detected by the shock sensor, current status information of the terminal, and trigger position information of the tapping trigger signal that is detected by using the shock sensor; and
the acquiring a tapping response event that matches the identified tapping action type includes:
   searching for a tapping response event that matches the at least three taps within the preset time and matches the acquired tapping frequency information, the acquired trigger position information, and the acquired current status information.

With reference to the first aspect and any one of the foregoing possible implementation manners, in another possible implementation manner, if it is identified that the tapping action type is the at least three taps within the preset time, after the tapping trigger signal is detected and the tapping action type corresponding to the tapping trigger signal is identified, the method further includes:
acquiring tapping direction information of the at least three taps within the preset time that are detected by the shock sensor; and
the acquiring a tapping response event that matches the identified tapping action type includes:
   searching for a tapping response event that matches the at least three taps within the preset time and matches the acquired tapping direction information.

With reference to the first aspect and any one of the foregoing possible implementation manners, in another possible implementation manner, if it is identified that the tapping action type is the at least three taps within the preset time, after the tapping trigger signal is detected and the tapping action type corresponding to the tapping trigger signal is identified, the method further includes:
acquiring tapping direction information of the at least three taps within the preset time that are detected by the shock sensor and tapping frequency information of the at least three taps within the preset time that are detected by the shock sensor; and
the acquiring a tapping response event that matches the identified tapping action type includes:
   searching for a tapping response event that matches the at least three taps within the preset time and matches the acquired tapping direction information and the acquired tapping frequency information.

With reference to the first aspect and any one of the foregoing possible implementation manners, in another possible implementation manner, if it is identified that the tapping action type is the at least three taps within the preset time, after the tapping action type corresponding to the tapping trigger signal is identified, the method further includes:
acquiring tapping frequency information and tapping direction information of the at least three taps within the preset time that are detected by the shock sensor and current status information of the terminal; and
the acquiring a tapping response event that matches the identified tapping action type includes:
   searching for a tapping response event that matches the at least three taps within the preset time and matches the acquired tapping frequency information, the acquired tapping direction information, and the acquired current status information.

With reference to the first aspect and any one of the foregoing possible implementation manners, in another possible implementation manner, if it is identified that the tapping action type is the at least three taps within the preset time, after the tapping action type corresponding to the tapping trigger signal is identified, the method further includes:
acquiring tapping direction information of the double taps within the preset time that are detected by the shock sensor; and
the acquiring a tapping response event that matches the identified tapping action type includes:
   searching for a tapping response event that matches the double taps within the preset time and matches the acquired tapping direction information.

With reference to the first aspect and any one of the foregoing possible implementation manners, in another possible implementation manner, if it is identified that the tapping action type is the at least three taps within the preset time, after the tapping action type corresponding to the tapping trigger signal is identified, the method further includes:
acquiring tapping direction information of the double taps within the preset time that are detected by the shock sensor and current status information of the terminal; and
the acquiring a tapping response event that matches the identified tapping action type includes:
   searching for a tapping response event that matches the double taps within the preset time and matches the acquired tapping direction information and the acquired current status information.

A second aspect of the embodiments of the present invention further provides a terminal, including:
a shock sensor, configured to detect a tapping trigger signal within a preset frequency range; and
a processor, configured to: after the shock sensor detects the tapping trigger signal, identify a tapping action type corresponding to the tapping trigger signal; acquire a tapping response event that matches the identified tapping action type; and execute the tapping response event.

With reference to the second aspect, in a possible implementation manner, the processor is further configured to: after the tapping trigger signal is detected, acquire current status information of the terminal; and
the processor is further configured to search for a tapping response event that matches the identified tapping action type and matches the acquired current status information.

With reference to the second aspect and the foregoing possible implementation manner, in another possible implementation manner, the processor is further configured to: after the tapping trigger signal is detected, acquire trigger position information of the tapping trigger signal that is detected by using the shock sensor; and
the processor is further configured to search for a tapping response event that matches the identified tapping action type and matches the acquired trigger position information.

With reference to the second aspect and the foregoing possible implementation manners, in another possible implementation manner, the processor is further configured to: after the tapping trigger signal is detected, acquire current status information of the terminal and trigger position information of the tapping trigger signal that is detected by the shock sensor; and
the processor is further configured to search for a tapping response event that matches the identified tapping action type and matches the acquired current status information and the acquired trigger position information.

With reference to the second aspect and any one of the foregoing possible implementation manners, in another possible implementation manner, the tapping action type includes: a single tap within a preset time, double taps within a preset time, or at least three taps within a preset time.

With reference to the second aspect and any one of the foregoing possible implementation manners, in another possible implementation manner, the processor is further configured to: if it is identified that the tapping action type is the at least three taps within the preset time, after identifying the tapping action type corresponding to the tapping trigger signal, acquire tapping frequency information of the at least three taps within the preset time that are detected by the shock sensor; and
the processor is further configured to search for a tapping response event that matches the at least three taps within the preset time and matches the acquired tapping frequency information.

With reference to the second aspect and any one of the foregoing possible implementation manners, in another possible implementation manner, the processor is further configured to: if it is identified that the tapping action type is the at least three taps within the preset time, after identifying the tapping action type corresponding to the tapping trigger signal, acquire tapping frequency information of the at least three taps within the preset time that are detected by the shock sensor; and
the processor is further configured to search for a tapping response event that matches the at least three taps within the preset time and matches the acquired tapping frequency information and acquired current status information.

With reference to the second aspect and any one of the foregoing possible implementation manners, in another possible implementation manner, the processor is further configured to: if it is identified that the tapping action type is the at least three taps within the preset time, after identifying the tapping action type corresponding to the tapping trigger signal, acquire tapping frequency information of the at least three taps within the preset time that are detected by the shock sensor; and
the processor is further configured to search for a tapping response event that matches the at least three taps within the preset time and matches the acquired tapping frequency information and acquired trigger position information.

With reference to the second aspect and any one of the foregoing possible implementation manners, in another possible implementation manner, the processor is further configured to: if it is identified that the tapping action type is the at least three taps within the preset time, after identifying the tapping action type corresponding to the tapping trigger signal, acquire tapping frequency information of the at least three taps within the preset time that are detected by the shock sensor; and
the processor is further configured to search for a tapping response event that matches the at least three taps within the preset time and matches the acquired tapping frequency information, acquired trigger position information, and acquired current status information.

With reference to the second aspect and any one of the foregoing possible implementation manners, in another possible implementation manner, the processor is further configured to: if it is identified that the tapping action type is the at least three taps within the preset time, after the tapping trigger signal is detected and the tapping action type corresponding to the tapping trigger signal is identified, acquire tapping direction information of the at least three taps within the preset time that are detected by the shock sensor; and
the processor is further configured to search for a tapping response event that matches the at least three taps within the preset time and matches the acquired tapping direction information.

With reference to the second aspect and any one of the foregoing possible implementation manners, in another possible implementation manner, the processor is further configured to: if it is identified that the tapping action type is the at least three taps within the preset time, after the tapping trigger signal is detected and the tapping action type corresponding to the tapping trigger signal is identified, acquire tapping direction information of the at least three taps within the preset time that are detected by the shock sensor and tapping frequency information of the at least three taps within the preset time that are detected by the shock sensor; and
the processor is further configured to search for a tapping response event that matches the at least three taps within the preset time and matches the acquired tapping direction information and the acquired tapping frequency information.

With reference to the second aspect and any one of the foregoing possible implementation manners, in another possible implementation manner, the processor is further configured to: if it is identified that the tapping action type is the at least three taps within the preset time, after the tapping trigger signal is detected and the tapping action type corresponding to the tapping trigger signal is identified, acquire tapping frequency information and tapping direction information of the at least three taps within the preset time that are detected by the shock sensor and current status information of the terminal; and
the processor is further configured to search for a tapping response event that matches the at least three taps within the preset time and matches the acquired tapping frequency information, the acquired tapping direction information, and the acquired current status information.

With reference to the second aspect and any one of the foregoing possible implementation manners, in another possible implementation manner, the processor is further configured to: if it is identified that the tapping action type is the at least three taps within the preset time, after identifying the tapping action type corresponding to the tapping trigger signal, acquire tapping direction information of the double taps within the preset time that are detected by the shock sensor; and

the processor is further configured to search for a tapping response event that matches the double taps within the preset time and matches the acquired tapping direction information.

With reference to the second aspect and any one of the foregoing possible implementation manners, in another possible implementation manner, the processor is further configured to: if it is identified that the tapping action type is the at least three taps within the preset time, after identifying the tapping action type corresponding to the tapping trigger signal, acquire tapping direction information of the double taps within the preset time that are detected by the shock sensor and current status information of the terminal; and
the processor is further configured to search for a tapping response event that matches the double taps within the preset time and matches the acquired tapping direction information and the acquired current status information.

According to the tapping control method and terminal provided in the embodiments of the present invention, a tapping trigger signal within a preset frequency range can be detected by using a shock sensor; after the tapping trigger signal is detected, a tapping action type corresponding to the tapping trigger signal is identified; a tapping response event that matches the identified tapping action type is acquired; and the tapping response event is executed. Compared with the prior art, because the shock sensor can detect the tapping trigger signal within the preset frequency range, a problem is avoided that frequent automatic setting of the terminal is caused due to a trigger signal out of the preset frequency range detected by the terminal (for example, the terminal detects a trigger signal generated from an unconscious shaking operation of a user during walking), thereby implementing accurate operation control on the terminal and improving a capability of the terminal to interact with the user.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a tapping control method according to Embodiment 1 of the present invention;
FIG. 2 is a flowchart of a tapping control method according to Embodiment 2 of the present invention;
FIG. 3 is a flowchart of a tapping control method according to Embodiment 3 of the present invention;
FIG. 4 is a flowchart of another tapping control method according to Embodiment 3 of the present invention;
FIG. 5 is a flowchart of a tapping control method according to Embodiment 4 of the present invention;
FIG. 6 is a flowchart of another tapping control method according to Embodiment 4 of the present invention;
FIG. 7 is a flowchart of another tapping control method according to Embodiment 4 of the present invention;
FIG. 8 is a flowchart of another tapping control method according to Embodiment 4 of the present invention;
FIG. 9 is a flowchart of a tapping control method according to Embodiment 5 of the present invention;
FIG. 10 is a flowchart of another tapping control method according to Embodiment 5 of the present invention;
FIG. 11 is a flowchart of another tapping control method according to Embodiment 5 of the present invention;
FIG. 12 is a flowchart of another tapping control method according to Embodiment 5 of the present invention;
FIG. 13 is a flowchart of another tapping control method according to Embodiment 5 of the present invention;
FIG. 14 is a flowchart of another tapping control method according to Embodiment 5 of the present invention;
FIG. 15 is a schematic composition diagram of a terminal according to Embodiment 7 of the present invention; and
FIG. 16 is a schematic composition diagram of a mobile phone according to Embodiment 7 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

### Embodiment 1

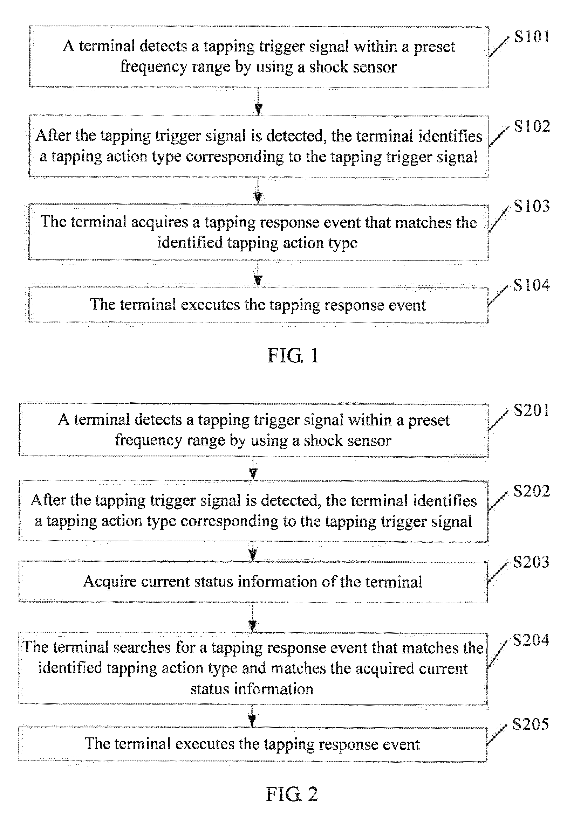

This embodiment of the present invention provides a tapping control method, which may be applied to a terminal, where the terminal includes a shock sensor, and the shock sensor is configured to detect a tapping trigger signal within a preset frequency range. As shown in FIG. 1, the tapping control method includes:
S101. The terminal detects a tapping trigger signal within a preset frequency range by using the shock sensor.

Specifically, the terminal in this embodiment of the present invention may be a terminal including a shock sensor capable of detecting a tapping trigger signal within a preset frequency range. The shock sensor may be a sensor built in an intelligent terminal, or may be an external sensor that is connected to the terminal and capable of detecting a tapping action of a user on the terminal.

Exemplarily, the terminal may be any one of a mobile phone, a tablet computer, a personal digital assistant (Personal Digital Assistant, PDA), a point of sale (Point of Sales, POS), a vehicle-mounted computer, a wearable device, and the like.

It should be noted that in the prior art, when a motion sensor (for example, a G-Sensor) is used to detect a trigger signal generated from an external shock, vibration, and the like on the terminal, a trigger signal that can be detected is a low-frequency signal of approximately 50 Hz, and a highest-frequency trigger signal that can be detected by the motion sensor is a 200 Hz trigger signal. For example, flipping and waving of the terminal by the user and shaking of the terminal in the walking process of the user belong to a low-frequency trigger described above. If the G-Sensor is used to collect information about a trigger by the user on the terminal and perform related setting on the terminal, there may exist the following case: unconscious flipping, waving, and shaking operations of the user on the terminal may cause the G-Sensor to frequently output signals, which causes frequent automatic setting of the terminal and further affects the user's normal use of the terminal. For example, if the G-Sensor is used to detect a trigger signal generated from an external shock, a vibration, and the like on the terminal, the terminal may mute the mobile phone according to an unconscious shaking operation in the walking process of the user, and consequently, the user may miss an incoming call.

Compared with the G-Sensor in the prior art, the shock sensor (Shock Sensor) used in this embodiment of the present invention may be configured to detect a tapping trigger signal generated from an operation similar to a tap on the terminal by the user, where a frequency of the tapping trigger signal generated when the user taps the terminal is at least 200 Hz. Specifically, a frequency range of a signal that can be collected by the shock sensor (Shock Sensor) is generally between 250 Hz and 400 Hz.

The frequency range of the signal that can be collected by the shock sensor (Shock Sensor) in this embodiment of the present invention is between 250 Hz and 400 Hz. A frequency value included in the frequency range is much greater than a highest frequency value 200 Hz that can be collected by the G-Sensor in the prior art, and a frequency value included in the frequency range is much greater than an accelerated variation frequency of the unconscious flipping, waving, and shaking operations of the user on the terminal. Therefore, the shock sensor (Shock Sensor) in this embodiment of the present invention can avoid frequent setting of the terminal by unawareness of the terminal by the user.

S102. After the tapping trigger signal is detected, the terminal identifies a tapping action type corresponding to the tapping trigger signal.

Specifically, the tapping action type in this embodiment of the present invention may include: a single tap within a preset time, double taps within a preset time, or at least three taps within a preset time.

S103. The terminal acquires a tapping response event that matches the identified tapping action type.

The terminal may search a tapping event set prestored in the terminal for the tapping response event that matches the identified tapping action type. A matching relationship between a tapping response event and a tapping action type may be a matching relationship that is a fixed preconfiguration made by a server for the terminal and is saved in the terminal in a form of a tapping event set; or a matching relationship between a tapping response event and a tapping action type may be a matching relationship that is prerecorded by a server according to a personal operation preference of a terminal user and saved in the terminal in a form of a tapping event set.

The terminal may also acquire, from a server side by sending an event request message that includes the identified tapping action type to a server, the tapping response event that matches the identified tapping action type. A matching relationship between a tapping response event and a tapping action type may be a matching relationship that is a fixed preconfiguration made by the server for the terminal and is saved in the server; or a matching relationship between a tapping response event and a tapping action type may be a matching relationship that is prerecorded by the server according to a personal operation preference of a terminal user and saved in the server. Exemplarily, the server may further save, in the server in the form of a tapping event set, the matching relationship that is between a tapping response event and a tapping action type and configured or recorded by the server for the terminal.

S104. The terminal executes the tapping response event.

Specifically, that the terminal executes the tapping response event may include: the terminal switches the terminal from a first state to a second state; or the terminal invokes an application that matches the tapping action type. For specific implementation of switching, by the terminal, the terminal from a first state to a second state or that of invoking, by the terminal, an application that matches the tapping action type, reference may be made to related descriptions in specific application scenarios in Embodiment 6 of the present invention, and details are not described again in this embodiment of the present invention.

According to the tapping control method provided in this embodiment of the present invention, a terminal can detect a tapping trigger signal within a preset frequency range by using a shock sensor; after the tapping trigger signal is detected, identify a tapping action type corresponding to the tapping trigger signal; acquire a tapping response event that matches the identified tapping action type; and execute the tapping response event. Compared with the prior art, because the shock sensor can detect the tapping trigger signal within the preset frequency range, a problem is avoided that frequent automatic setting of the terminal is caused due to a trigger signal out of the preset frequency range detected by the terminal (for example, the terminal detects a trigger signal generated from an unconscious shaking operation of a user during walking), thereby implementing accurate operation control on the terminal and improving a capability of the terminal to interact with the user.

### Embodiment 2

This embodiment of the present invention provides a tapping control method, which may be applied to a terminal, where the terminal includes a shock sensor, and the shock sensor is configured to detect a tapping trigger signal within a preset frequency range. As shown in FIG. 2, the tapping control method includes:
S201. The terminal detects a tapping trigger signal within a preset frequency range by using the shock sensor.

It should be noted that because the terminal in this embodiment is the same as the terminal in Embodiment 1, for a specific description of the terminal in this embodiment, reference may be made to related content in Embodiment 1, and details are not described again in this embodiment.

The shock sensor (Shock Sensor) used in this embodiment of the present invention may be configured to detect a tapping trigger signal generated from an operation similar to a tap on the terminal by a user, where a frequency of the tapping trigger signal generated when the user taps the terminal is at least 200 Hz. Specifically, a frequency range of a signal that can be collected by the shock sensor (Shock Sensor) is generally between 250 Hz and 400 Hz.

The frequency range of the signal that can be collected by the shock sensor (Shock Sensor) in this embodiment of the present invention is between 250 Hz and 400 Hz. A frequency value included in the frequency range is much greater than a highest frequency value 200 Hz that can be collected by the G-Sensor in the prior art, and a frequency value included in the frequency range is much greater than an accelerated variation frequency of unconscious flipping, waving, and shaking operations of the user on the terminal (the accelerated variation frequency of the unconscious flipping, waving, and shaking operations of the user on the terminal is a maximum of 200 Hz). Therefore, the shock sensor (Shock Sensor) in this embodiment of the present invention can avoid frequent setting of the terminal caused by an unconscious operation of the user.

S202. After the tapping trigger signal is detected, the terminal identifies a tapping action type corresponding to the tapping trigger signal.

It should be noted that for a specific method in which the terminal identifies the tapping action type corresponding to the tapping trigger signal, reference may be made to a related description in Embodiment 1 of the present invention, and details are not described again in this embodiment.

Further, in an application scenario of this embodiment of the present invention, when the terminal detects the tapping trigger signal within the preset frequency range by using the shock sensor, the terminal may be in different states (for example, the terminal is in a music playing state, the terminal is in an audio communication state, the terminal is in a video communication state, or the terminal is in a video or photo taking state), that is, when the terminal detects the tapping trigger signal within the preset frequency range, current status information of the terminal may be different. Therefore, a tapping event set prestored in the terminal or a server may further include: a matching relationship between a tapping response event and a tapping action type and a matching relationship between a tapping response event and current status information of the terminal.

Therefore, when the terminal detects a tapping trigger signal corresponding to a same tapping action type, if the current status information of the terminal is different, the terminal may acquire more than one tapping response event that matches the tapping action type. Therefore, after the terminal detects the tapping trigger signal, the method in this embodiment of the present invention may further include S203.

S203. Acquire current status information of the terminal.

Exemplarily, the current status information of the terminal may be any of status indication information among: status indication information indicating that the terminal is in a music playing state, status indication information indicating that the terminal is in an audio communication state, status indication information indicating that the terminal is in a video communication state, status indication information indicating that the terminal is in a video or photo taking state, status indication information indicating that the terminal is in a standby state, status indication information indicating that the terminal is in a screen locked state, status indication information indicating that the terminal is in a black screen state, and the like. In addition, in this embodiment, when the terminal detects a tapping trigger signal corresponding to the same tapping action type, if the current status information of the terminal is different, the terminal may acquire a different tapping response event.

For example, when the terminal detects a tapping trigger signal corresponding to a tapping action type being a single tap within a preset time, if the current status information of the terminal indicates that the terminal is in an audio communication state, a tapping response event acquired by the terminal may be "raise volume of audio communication of the terminal"; when the terminal detects a tapping trigger signal corresponding to a tapping action type being a single tap within a preset time, if the current status information of the terminal indicates that the terminal is in a black screen state, a tapping response event acquired by the terminal may be "light up the screen of the mobile phone".

It should be noted that specific content of the current status information of the terminal includes but is not limited to the status indication information listed above; for example, the current status information of the terminal may also be status indication information indicating that the terminal is displaying text data by using an e-reader. Details about other content of the current status information of the terminal are not described again in this embodiment of the present invention.

S204. The terminal searches for a tapping response event that matches the identified tapping action type and matches the acquired current status information.

It should be noted that a method in which the terminal searches for the tapping response event in this embodiment is similar to the method in which a terminal searches for a tapping response event in Embodiment 1.

The terminal may search a tapping event set prestored in the terminal for the tapping response event that matches the identified tapping action type and the acquired current status information.

The matching relationship between a tapping response event and a tapping action type plus current status information of the terminal may be a matching relationship that is a fixed preconfiguration made by the server for the terminal and is saved in the terminal in a form of a tapping event set; or the matching relationship between a tapping response event and a tapping action type plus current status information of the terminal may be a matching relationship that is prerecorded by the server according to a personal operation preference of a terminal user and saved in the terminal in a form of a tapping event set.

The terminal may also acquire, from a server side by sending an event request message that includes the identified tapping action type and the current status information of the terminal to the server, the tapping response event that matches the identified tapping action type and the current status information of the terminal. The matching relationship between a tapping response event and a tapping action type plus current status information of the terminal may be a matching relationship that is a fixed preconfiguration made by the server for the terminal and is saved in the server; or the matching relationship between a tapping response event and a tapping action type plus current status information of the terminal may be a matching relationship that is prerecorded by the server according to a personal operation preference of a terminal user and saved in the server. Exemplarily, the server may further save, in the server in the form of a tapping event set, the matching relationship that is between a tapping response event and a tapping action type plus current status information of the terminal and configured or recorded by the server for the terminal.

S205. The terminal executes the tapping response event.

Specifically, a method in which the terminal executes the tapping response event may include: switching, by the terminal, the terminal from a first state to a second state; or invoking, by the terminal, an application that matches the tapping action type. For specific implementation of switching, by the terminal, the terminal from a first state to a second state or that of invoking, by the terminal, an application that matches the tapping action type, reference may be made to related descriptions in specific application scenarios in Embodiment 6 of the present invention, and details are not described again in this embodiment of the present invention.

According to the tapping control method provided in this embodiment of the present invention, a terminal can detect a tapping trigger signal within a preset frequency range by using a shock sensor; after the tapping trigger signal is detected, identify a tapping action type corresponding to the tapping trigger signal; acquire current status information of the terminal; acquire a tapping response event that matches the identified tapping action type and the current status information of the terminal; and execute the tapping response event.

Compared with the prior art, because the shock sensor can detect the tapping trigger signal within the preset frequency range, a problem is avoided that frequent automatic setting of the terminal is caused due to a trigger signal out of the preset frequency range detected by the terminal (for example, the terminal detects a trigger signal generated from an unconscious shaking operation of a user during walking), thereby implementing accurate operation control on the terminal and improving a capability of the terminal to interact with the user.

In addition, the terminal can acquire, according to the identified tapping action type corresponding to the tapping trigger signal and the current status information of the terminal, the tapping response event that matches the identified tapping action type and the current status information of the terminal. When a tapping trigger signal corresponding to the same tapping action type is detected, the terminal can find and execute a different tapping response event according to different current status information of the terminal, which further details a searching condition required for the terminal to search for a tapping response event, and can implement more accurate control on the terminal and further improve the capability of the terminal to interact with the user.

### Embodiment 3

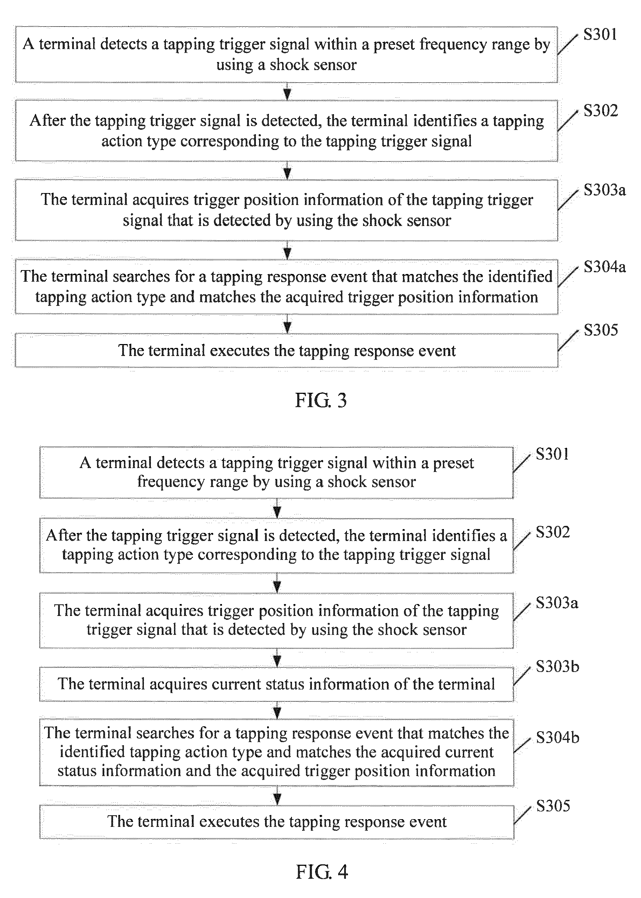

This embodiment of the present invention provides a tapping control method, which may be applied to a terminal, where the terminal includes a shock sensor, and the shock sensor is configured to detect a tapping trigger signal within a preset frequency range. As shown in FIG. 3, the tapping control method includes:
S301. The terminal detects a tapping trigger signal within a preset frequency range by using the shock sensor.

It should be noted that because the terminal and the shock sensor in this embodiment are the same as the terminal and the shock sensor in Embodiment 1 or 2, for specific descriptions of the terminal and the shock sensor in this embodiment, reference may be made to related content in Embodiment 1 or 2, and details are not described again in this embodiment.

S302. After the tapping trigger signal is detected, the terminal identifies a tapping action type corresponding to the tapping trigger signal.

It should be noted that for a specific method in which the terminal identifies the tapping action type corresponding to the tapping trigger signal, reference may be made to a related description in Embodiment 1 of The present invention, and details are not described again in this embodiment.

Further, in an application scenario of this embodiment of the present invention, when the terminal detects the tapping trigger signal within the preset frequency range by using the shock sensor, trigger position information of the tapping trigger signal detected by the terminal by using the shock sensor may be different. Therefore, a tapping event set prestored in the terminal or a server may further include: a matching relationship between a tapping response event and a tapping action type plus acquired trigger position information.

Therefore, when the terminal detects a tapping trigger signal corresponding to a same tapping action type, if the trigger position information acquired by the terminal is different, the terminal may acquire more than one tapping response event that matches the tapping action type. Therefore, after the terminal detects the tapping trigger signal, the method in this embodiment of the present invention may further include S303a.

S303a. The terminal acquires trigger position information of the tapping trigger signal that is detected by using the shock sensor.

Exemplarily, when the shock sensor detects a tapping action, the terminal may acquire, by identifying tapping orientation information of the tapping action on the terminal by using the shock sensor, the trigger position information of the tapping trigger signal that is detected by using the shock sensor.

Exemplarily, the trigger position information may be a tapping position of the tapping action corresponding to the tapping trigger signal on the terminal, when the terminal detects the tapping trigger signal by using the shock sensor. For example, the trigger position information may be any location information among: a front screen of the terminal, a back housing of the terminal, a part above a center of the front screen of the terminal, a part below the center of the front screen of the terminal, a part on the left of the center of the front screen of the terminal, a part on the right of the center of the front screen of the terminal, and the like. In addition, in this embodiment, when the terminal detects a tapping trigger signal corresponding to the same tapping action type, if the trigger position information of the terminal is different, the terminal may acquire a different tapping response event.

For example, when the terminal detects a tapping trigger signal corresponding to a tapping action type being a single tap within a preset time, if the trigger position information is the part on the left of the center of the front screen of the terminal, a tapping response event acquired by the terminal may be "lower screen brightness of the terminal according to a preset proportion"; when the terminal detects a tapping trigger signal corresponding to a tapping action type being a single tap within a preset time, if the trigger position information is the part on the right of the center of the front screen of the terminal, a tapping response event acquired by the terminal may be "raise screen brightness of the terminal according to a preset proportion".

It should be noted that the tapping action type in this embodiment of the present invention may include: a single tap within a preset time, double taps within a preset time, or at least three taps within a preset time. The preset time may be preconfigured by the server for an electronic device, or may be configured by the terminal according to a time setting operation of a user. Generally, the preset time is in unit of seconds, and if the terminal does not detect the second tapping action within a preset time threshold after a tapping action is detected by using the shock sensor, the terminal determines that this tapping action (including the single tap within the preset time, the double taps within the preset time, or the at least three taps within the preset time) ends, where the preset time threshold is less than the preset time. The terminal may determine a length of the preset time according to a quantity of tapping actions of one tap detected by the shock sensor.

Further, in this embodiment, when the tapping action type is the double taps within the preset time or the at least three taps within the preset time, the terminal may acquire more than one piece of trigger position information for multiple taps within the preset time. For example, if the tapping action type is the double taps within the preset time, the double taps may be two tapping actions of the user at different positions of the terminal, and the terminal may acquire two pieces of trigger position information. Consequently, the terminal may determine a specific piece of trigger position information that is in the two pieces of trigger position information and that a tapping response event that the terminal needs to search for matches. Therefore, when it is identified that the tapping action type is the double taps within the preset time, the terminal needs to acquire tapping position information corresponding to each tap of the double taps, and then determines whether a position offset between acquired tapping positions is less than a preset position offset threshold. If the terminal determines that the position offset between the acquired tapping positions is less than the preset position offset threshold, the terminal may determine that tapping position information corresponding to any tap of the double taps is the trigger position information of the double taps; if the terminal determines that the position offset between the acquired tapping positions is not less than the preset position offset threshold, the terminal may determine that tapping position information corresponding to the first tap of the double taps is the trigger position information of the double taps.

When the terminal identifies that the tapping action type is the at least three taps within the preset time, a specific method in which the terminal determines trigger position information of the at least three taps is similar to the method in which the terminal determines the trigger position information of the double taps within the preset time, and details are not described again in this embodiment of the present invention.

It should be noted that specific content of the trigger position information includes but is not limited to the status indication information listed above, and other content of the trigger position information is not described again in this embodiment of the present invention.

S304a. The terminal searches for a tapping response event that matches the identified tapping action type and matches the acquired trigger position information.

It should be noted that a method in which the terminal searches for the tapping response event in this embodiment is similar to the method in which a terminal searches for a tapping response event in Embodiment 1.

The terminal may search a tapping event set prestored in the terminal for the tapping response event that matches the identified tapping action type and the acquired trigger position information.

The matching relationship between a tapping response event and a tapping action type plus trigger position information of the terminal may be a matching relationship that is a fixed preconfiguration made by the server for the terminal and is saved in the terminal in a form of a tapping event set; or the matching relationship between a tapping response event and a tapping action type plus trigger position information may be a matching relationship that is prerecorded by the server according to a personal operation preference of a terminal user and saved in the terminal in a form of a tapping event set.

The terminal may also acquire, from a server side by sending an event request message that includes the identified tapping action type and the trigger position information to the server, the tapping response event that matches the identified tapping action type and the trigger position information. The matching relationship between a tapping response event and a tapping action type plus trigger position information may be a matching relationship that is a fixed preconfiguration made by the server for the terminal and is saved in the server; or the matching relationship between a tapping response event and a tapping action type plus trigger position information may be a matching relationship that is prerecorded by the server according to a personal operation preference of a terminal user and saved in the server. Exemplarily, the server may further save, in the server in the form of a tapping event set, the matching relationship that is between a tapping response event and a tapping action type plus trigger position information and configured or recorded by the server for the terminal.

S305. The terminal executes the tapping response event.

Specifically, a method in which the terminal executes the tapping response event may include: switching, by the terminal, the terminal from a first state to a second state; or invoking, by the terminal, an application that matches the tapping action type. For specific implementation of switching, by the terminal, the terminal from a first state to a second state or that of invoking, by the terminal, an application that matches the tapping action type, reference may be made to related descriptions in specific application scenarios in Embodiment 6 of the present invention, and details are not described again in this embodiment of the present invention.

Further and optionally, as shown in FIG. 4, in another application scenario of this embodiment of the present invention, before S304, the method in this embodiment of the present invention may further include:
S303b. The terminal acquires current status information of the terminal.

It should be noted that for a method in which the terminal acquires the current status information of the terminal, reference may be made to the method in which a terminal acquires current status information of the terminal in Embodiment 2, and details are not described again in this embodiment of the present invention.

Further, it should be noted that in this application scenario, S303a may be performed before S303b, may be performed after S303b, or may be performed simultaneously with S303b. A sequence of performing S303a and S303b is not limited in this embodiment of the present invention.

Accordingly, in this application scenario, S304a may be replaced with S304b.

S304b. The terminal searches for a tapping response event that matches the identified tapping action type and matches the acquired current status information and the acquired trigger position information.

It should be noted that a method in which the terminal searches for the tapping response event that matches the identified tapping action type and matches the acquired current status information and the acquired trigger position information is similar to the method in which a terminal searches for a tapping response event in Embodiment 2 or S304a in this embodiment, reference may be made to the specific method in which the terminal searches for the tapping response event in Embodiment 2 or S304a in this embodiment, and details are not described again in this embodiment of the present invention.

According to the tapping control method provided in this embodiment of the present invention, a terminal can detect a tapping trigger signal within a preset frequency range by using a shock sensor; after the tapping trigger signal is detected, identify a tapping action type corresponding to the tapping trigger signal; acquire trigger position information of the tapping trigger signal that is detected by using the shock sensor; acquire a tapping response event that matches the identified tapping action type and the trigger position information; and execute the tapping response event.

Compared with the prior art, because the shock sensor can detect the tapping trigger signal within the preset frequency range, a problem is avoided that frequent automatic setting of the terminal is caused due to a trigger signal out of the preset frequency range detected by the terminal (for example, the terminal detects a trigger signal generated from an unconscious shaking operation of a user during walking), thereby implementing accurate operation control on the terminal and improving a capability of the terminal to interact with the user.

In addition, the terminal can acquire, according to the identified tapping action type corresponding to the tapping trigger signal and the trigger position information, the tapping response event that matches the identified tapping action type and the trigger position information. When a tapping trigger signal corresponding to the same tapping action type is detected, the terminal can find and execute a different tapping response event according to different trigger position information, which further details a searching condition required for the terminal to search for a tapping response event, and can implement more accurate control on the terminal and further improve the capability of the terminal to interact with the user.

### Embodiment 4

This embodiment of the present invention provides a tapping control method, which may be applied to a terminal, where the terminal includes a shock sensor, and the shock sensor is configured to detect a tapping trigger signal within a preset frequency range. The tapping control method includes:
S401. The terminal detects a tapping trigger signal within a preset frequency range by using the shock sensor.

It should be noted that because the terminal and the shock sensor in this embodiment are the same as the terminal and the shock sensor in Embodiment 1 or 2, for specific descriptions of the terminal and the shock sensor in this embodiment, reference may be made to related content in Embodiment 1 or 2, and details are not described again in this embodiment.

S402. After the tapping trigger signal is detected, the terminal identifies a tapping action type corresponding to the tapping trigger signal.

It should be noted that for a specific method in which the terminal identifies the tapping action type corresponding to the tapping trigger signal, reference may be made to a related description in Embodiment 1 of the present invention, and details are not described again in this embodiment.

S403. The terminal determines that the tapping action type is at least three taps within a preset time.

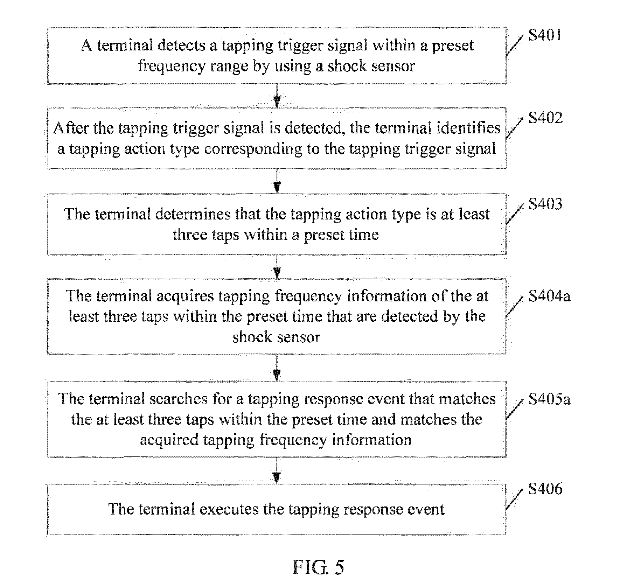

In a first application scenario of this embodiment, as shown in FIG. 5, after the terminal determines that the tapping action type is the at least three taps within the preset time, the method in this embodiment of the present invention further includes S404a, S405a, and S406.

S404a. The terminal acquires tapping frequency information of the at least three taps within the preset time that are detected by the shock sensor.

Specifically, the terminal may acquire time intervals between the at least three taps when the shock sensor detects the at least three taps within the preset time, and then calculate, according to the time intervals between the at least three taps, the tapping frequency information of the at least three taps within the preset time that are detected.

For a specific method in which the terminal calculates, according to the time intervals between the at least three taps, the tapping frequency information of the at least three taps within the preset time that are detected, reference may be made to a specific method for a tapping frequency in the prior art. In addition, the method in which the terminal acquires the tapping frequency information of the at least three taps within the preset time includes but is not limited to the method in which the tapping frequency information is calculated according to the time intervals between the at least three taps, and details about another method in which the terminal acquires the tapping frequency information are not described again in this embodiment of the present invention.

S405a. The terminal searches for a tapping response event that matches the at least three taps within the preset time and matches the acquired tapping frequency information.

It should be noted that a method in which the terminal searches for the tapping response event in this embodiment is similar to the method in which a terminal searches for a tapping response event in Embodiment 1.

The terminal may search a tapping event set prestored in the terminal for the tapping response event that matches the identified at least three taps within the preset time and the acquired trigger position information.

A matching relationship between a tapping response event and at least three taps within a preset time plus trigger position information of the terminal may be a matching relationship that is a fixed preconfiguration made by a server for the terminal and is saved in the terminal in a form of a tapping event set; or a matching relationship between a tapping response event and at least three taps within a preset time plus trigger position information may be a matching relationship that is prerecorded by a server according to a personal operation preference of a terminal user and saved in the terminal in a form of a tapping event set.

The terminal may also acquire, from a server side by sending an event request message that includes the identified at least three taps within the preset time and the trigger position information to a server, the tapping response event that matches the identified at least three taps within the preset time and the trigger position information. A matching relationship between a tapping response event and at least three taps within a preset time plus trigger position information may be a matching relationship that is a fixed preconfiguration made by the server for the terminal and is saved in the server; or a matching relationship between a tapping response event and at least three taps within a preset time plus trigger position information may be a matching relationship that is prerecorded by the server according to a personal operation preference of a terminal user and saved in the server. Exemplarily, the server may further save, in the server in the form of a tapping event set, the matching relationship that is between a tapping response event and at least three taps within a preset time plus trigger position information and configured or recorded by the server for the terminal.

S406. The terminal executes the tapping response event.

Specifically, a method in which the terminal executes the tapping response event may include: switching, by the terminal, the terminal from a first state to a second state; or invoking, by the terminal, an application that matches the tapping action type. For specific implementation of switching, by the terminal, the terminal from a first state to a second state or that of invoking, by the terminal, an application that matches the tapping action type, reference may be made to related descriptions in specific application scenarios in Embodiment 6 of the present invention, and details are not described again in this embodiment of the present invention.

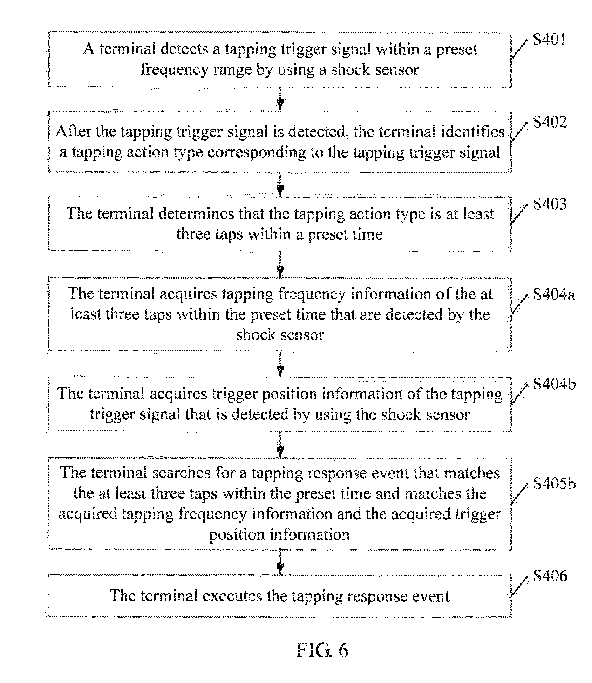

Further and optionally, in a second application scenario of this embodiment, as shown in FIG. 6, after the terminal determines that the tapping action type is the at least three taps within the preset time, the method in this embodiment of the present invention further includes S404a, S404b, S405b, and S406.

404b. The terminal acquires trigger position information of the tapping trigger signal that is detected by using the shock sensor.

It should be noted that for a method in which the terminal acquires the trigger position information of the tapping trigger signal that is detected by using the shock sensor, reference may be made to a specific description in Embodiment 1, Embodiment 2, or Embodiment 3 of the present invention, and details are not described again in this embodiment of the present invention.

Further, it should be noted that in the second application scenario of this embodiment, S404a may be performed before S404b, may be performed after S404b, or may be performed simultaneously with S404b. A sequence of performing S404a and S404b is not limited in this embodiment of the present invention.

S405b. The terminal searches for a tapping response event that matches the at least three taps within the preset time and matches the acquired tapping frequency information and the acquired trigger position information.

It should be noted that a method in which the terminal searches for the tapping response event in this embodiment is similar to the method in which a terminal searches for a tapping response event in Embodiment 1.

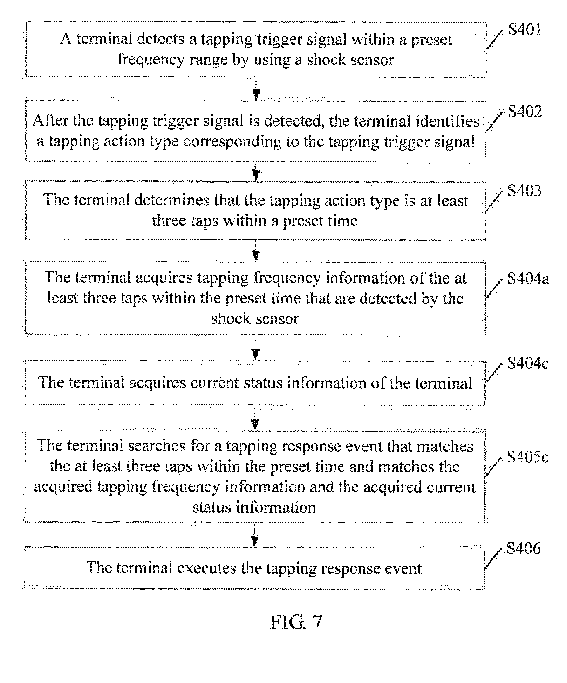

Further and optionally, in a third application scenario of this embodiment, as shown in FIG. 7, after the terminal determines that the tapping action type is the at least three taps within the preset time, the method in this embodiment of the present invention further includes S404a, S404c, S405cb, and S406.

S404c. The terminal acquires current status information of the terminal.

It should be noted that for a method in which the terminal acquires the current status information of the terminal, reference may be made to the method in which a terminal acquires current status information of the terminal in Embodiment 2, and details are not described again in this embodiment of the present invention.

Further, it should be noted that in the third application scenario of this embodiment, S404a may be performed before S404c, may be performed after S404c, or may be performed simultaneously with S404c. A sequence of performing S404a and S404c is not limited in this embodiment of the present invention.

Accordingly, in the third application scenario of this embodiment, S405a may also be replaced with S405c.

S405c. The terminal searches for a tapping response event that matches the at least three taps within the preset time and matches the acquired tapping frequency information and the acquired current status information.

It should be noted that a method in which the terminal searches for the tapping response event that matches the identified at least three taps within the preset time and matches the acquired current status information is similar to the method in which a terminal searches for a tapping response event in Embodiment 2 or Embodiment 3, reference may be made to the specific method in which the terminal searches for the tapping response event in Embodiment 2 or Embodiment 3, and details are not described again in this embodiment of the present invention.

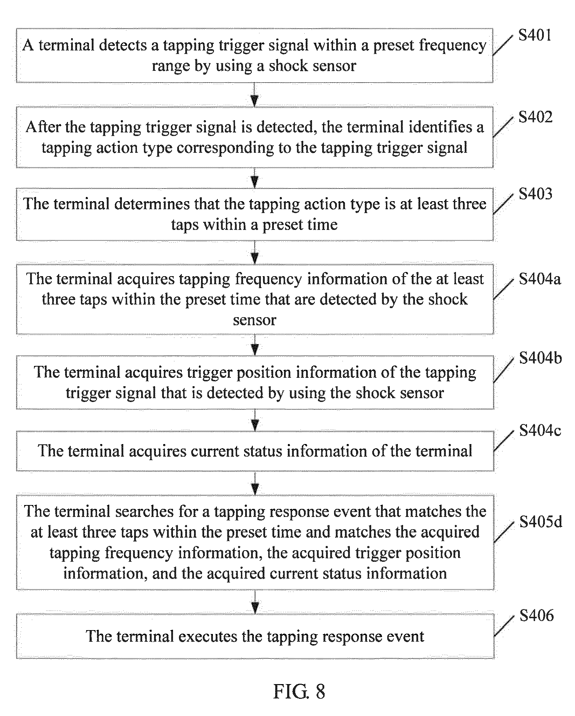

Further and optionally, in a fourth application scenario of this embodiment, as shown in FIG. 8, after the terminal determines that the tapping action type is the at least three taps within the preset time, the method in this embodiment of the present invention further includes S404a, S404b, S404c, S405d, and S406.

It should be noted that a sequence of performing S404a, S404b, and S404c is not limited in this embodiment of the present invention.

Accordingly, in the fourth application scenario of this embodiment, S405a may also be replaced with S405d.

S405d. The terminal searches for a tapping response event that matches the at least three taps within the preset time and matches the acquired tapping frequency information, the acquired trigger position information, and the acquired current status information.

It should be noted that a method in which the terminal searches for the tapping response event that matches the identified at least three taps within the preset time and matches the acquired tapping frequency information, the acquired trigger position information, and the acquired current status information is similar to the method in which a terminal searches for a tapping response event in Embodiment 2 or Embodiment 3, reference may be made to the specific method in which the terminal searches for the tapping response event in Embodiment 2 or Embodiment 3, and details are not described again in this embodiment of the present invention.

According to the tapping control method provided in this embodiment of the present invention, a terminal can detect a tapping trigger signal within a preset frequency range by using a shock sensor; after the tapping trigger signal is detected, if it is identified that a tapping action type corresponding to the tapping trigger signal is at least three taps within a preset time, acquire tapping frequency information of the at least three taps within the preset time; acquire trigger position information and/or current position information; acquire a tapping response event that matches the at least three taps within the preset time and the tapping frequency information and matches the trigger position information and/or the current position information; and execute the tapping response event.

Compared with the prior art, because the shock sensor can detect the tapping trigger signal within the preset frequency range, a problem is avoided that frequent automatic setting of the terminal is caused due to a trigger signal out of the preset frequency range detected by the terminal (for example, the terminal detects a trigger signal generated from an unconscious shaking operation of a user during walking), thereby implementing accurate operation control on the terminal and improving a capability of the terminal to interact with the user.

In addition, the terminal can acquire the tapping response event that matches the at least three taps within the preset time and the tapping frequency information and matches the trigger position information and/or current position information, which further details a searching condition required for the terminal to search for a tapping response event, and can implement more accurate control on the terminal and further improve the capability of the terminal to interact with the user.

### Embodiment 5

This embodiment of the present invention provides a tapping control method, which may be applied to a terminal, where the terminal includes a shock sensor, and the shock sensor is configured to detect a tapping trigger signal within a preset frequency range. The tapping control method includes:
S501. The terminal detects a tapping trigger signal within a preset frequency range by using the shock sensor.

It should be noted that the terminal in this embodiment is the same as the terminal and the shock sensor in Embodiment 1 or Embodiment 2, and the shock sensor in this embodiment is the same as the shock sensor in Embodiment 1 or Embodiment 2. Therefore, for specific descriptions of the terminal and the shock sensor in this embodiment, reference may be made to a specific description of related content in Embodiment 1 or Embodiment 2, and details are not described again in this embodiment.

S502. After the tapping trigger signal is detected, the terminal identifies a tapping action type corresponding to the tapping trigger signal.

It should be noted that for a specific method in which the terminal identifies the tapping action type corresponding to the tapping trigger signal, reference may be made to a related description in Embodiment 1 of the present invention, and details are not described again in this embodiment.

In a first application scenario of this embodiment, after the terminal detects the tapping trigger signal and identifies the tapping action type corresponding to the tapping trigger signal, the method in this embodiment of the present invention further includes S503a.

S503a. The terminal determines that the tapping action type is double taps within a preset time.

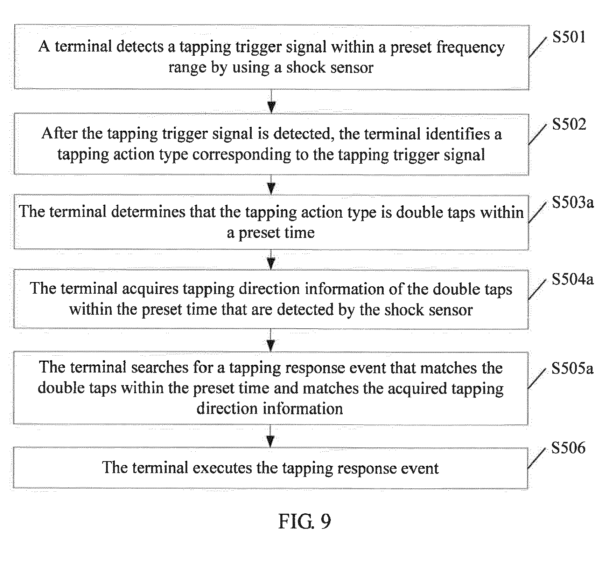

As shown in FIG. 9, in a first case of the first application scenario of this embodiment: after the terminal determines that the tapping action type is the double taps within the preset time, the method in this embodiment of the present invention may further include S504a, S505a, and S506.

S504a. The terminal acquires tapping direction information of the double taps within the preset time that are detected by the shock sensor.

When the tapping action type is the double taps within the preset time, the terminal acquires two pieces of tapping position information for the double taps within the preset time, and then the terminal can determine the tapping direction information of the double taps according to the acquired two pieces of tapping position information.

Exemplarily, if it is assumed that the terminal is a mobile phone, the tapping position information acquired by the terminal may be coordinate values (x, y, z) obtained by using a point at which any three sides on surfaces of the mobile phone intersect as a coordinate origin and the three sides that converge at the point respectively as an x-axis, a y-axis, and a z-axis. After acquiring the two pieces of tapping position information, the terminal may compare variations of three coordinate parameters between the two pieces of tapping position information (x1, y1, z1) and (x2, y2, z2), so as to determine a coordinate value that varies the most (for example, a parameter variation from x1 to x2 is the largest), and then determine the tapping direction information of the double taps according to the x-axis parameter variation from x1 to x2.

S505a. The terminal searches for a tapping response event that matches the double taps within the preset time and matches the acquired tapping direction information.

It should be noted that a method in which the terminal searches for the tapping response event in this embodiment is similar to the method in which a terminal searches for a tapping response event in another embodiment of the present invention, and details are not described again in this embodiment.

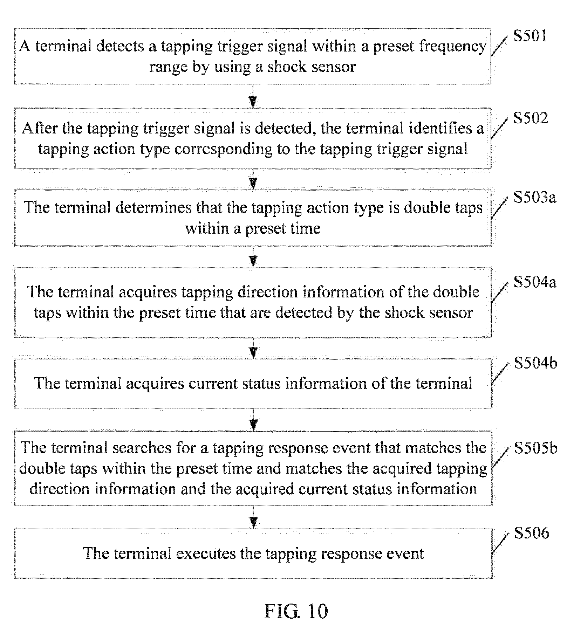

Further and optionally, as shown in FIG. 10, in a second case of the first application scenario of this embodiment, after the terminal determines that the tapping action type is the double taps within the preset time, the method in this embodiment of the present invention may further include S504a, S504b, S505b, and S506.

S504b. The terminal acquires current status information of the terminal.

S505b. The terminal searches for a tapping response event, that matches the double taps within the preset time and matches the acquired tapping direction information and the acquired current status information.

In a second application scenario of this embodiment, after the terminal detects the tapping trigger signal and identifies the tapping action type corresponding to the tapping trigger signal, the method in this embodiment of the present invention further includes S503b.

S503b. The terminal determines that the tapping action type is at least three taps within a preset time.

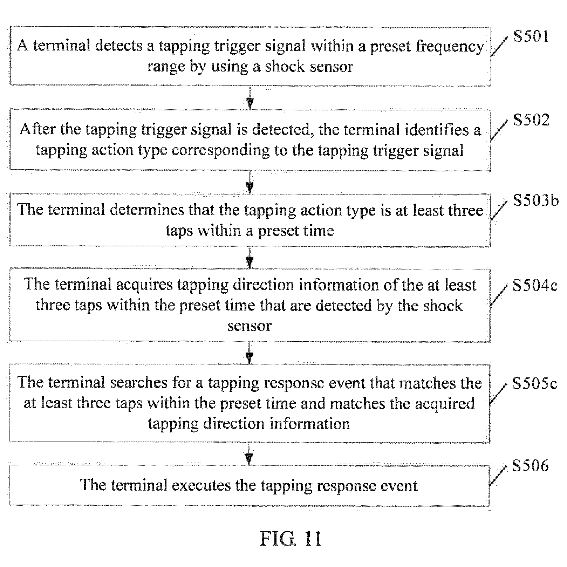

Further and optionally, as shown in FIG. 11, in a first case of the second application scenario of this embodiment, after the terminal determines that the tapping action type is the at least three taps within the preset time, the method in this embodiment may further include S504c, S505c, and S506.

S504c. The terminal acquires tapping direction information of the at least three taps within the preset time that are detected by the shock sensor.

It should be noted that a specific method in which the terminal acquires the tapping direction information of the at least three taps within the preset time that are detected by the shock sensor in this embodiment is similar to the method in which the terminal acquires the tapping direction information of the double taps within the preset time that are detected by the shock sensor in this embodiment, and details are not described again in this embodiment of the present invention.

S505c. The terminal searches for a tapping response event that matches the at least three taps within the preset time and matches the acquired tapping direction information.

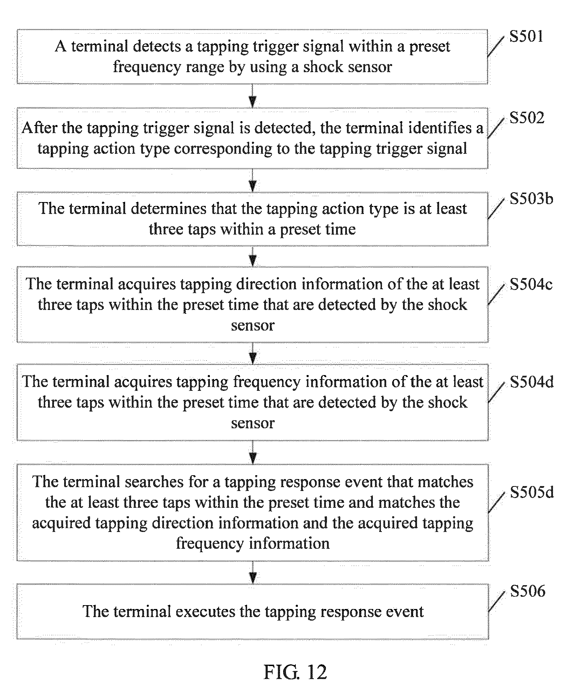

Further and optionally, as shown in FIG. 12, in a second case of the second application scenario of this embodiment, after the terminal determines that the tapping action type is the at least three taps within the preset time, the method in this embodiment may further include S504c, S504d, S505d, and S506.

S504d. The terminal acquires tapping frequency information of the at least three taps within the preset time that are detected by the shock sensor.

It should be noted that a specific method in which the terminal acquires the tapping frequency information of the at least three taps within the preset time is similar to the method in which the terminal the tapping frequency information of the double taps within the preset time in this embodiment, and details are not described again in this embodiment.

S505d. The terminal searches for a tapping response event that matches the at least three taps within the preset time and matches the acquired tapping direction information and the acquired tapping frequency information.

It should be noted that a method in which the terminal searches for the tapping response event in this embodiment is similar to the method in which a terminal searches for a tapping response event in another embodiment of the present invention, and details are not described again in this embodiment.

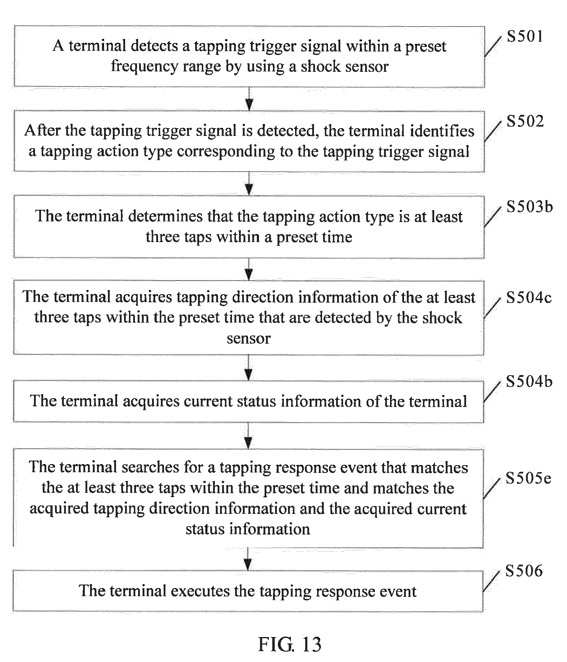

As shown in FIG. 13, in a third case of the second application scenario of this embodiment, after the terminal determines that the tapping action type is the at least three taps within the preset time, the method in this embodiment may further include S504b, S504c, S505e, and S506.

S505e. The terminal searches for a tapping response event that matches the at least three taps within the preset time and matches the acquired tapping direction information and the acquired current status information.

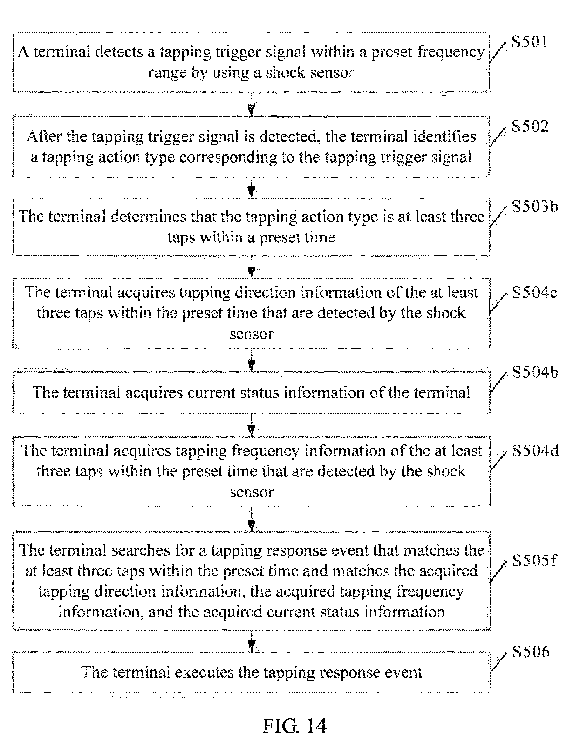

As shown in FIG. 14, in a fourth case of the second application scenario of this embodiment: after the terminal determines that the tapping action type is the at least three taps within the preset time, the method in this embodiment may further include S504b, S504c, S504d, S505f, and S506.

S505f. The terminal searches for a tapping response event that matches the at least three taps within the preset time and matches the acquired tapping direction information, the acquired tapping frequency information, and the acquired current status information.

S506. The terminal executes the tapping response event.

Specifically, a method in which the terminal executes the tapping response event may include: switching, by the terminal, the terminal from a first state to a second state; or invoking, by the terminal, an application that matches the tapping action type. For specific implementation of switching, by the terminal, the terminal from a first state to a second state or that of invoking, by the terminal, an application that matches the tapping action type, reference may be made to related descriptions in specific application scenarios in Embodiment 6 of the present invention, and details are not described again in this embodiment of the present invention.

According to the tapping control method provided in this embodiment of the present invention, a terminal can detect a tapping trigger signal within a preset frequency range by using a shock sensor; after the tapping trigger signal is detected, if it is identified that a tapping action type corresponding to the tapping trigger signal is double taps within a preset time or at least three taps within a preset time, acquire tapping direction information; search for a tapping response event that matches the double taps within the preset time or the at least three taps within the preset time and matches the double taps within the preset time; and execute the tapping response event.

Compared with the prior art, because the shock sensor can detect the tapping trigger signal within the preset frequency range, a problem is avoided that frequent automatic setting of the terminal is caused due to a trigger signal out of the preset frequency range detected by the terminal (for example, the terminal detects a trigger signal generated from an unconscious shaking operation of a user during walking), thereby implementing accurate operation control on the terminal and improving a capability of the terminal to interact with the user.

In addition, the terminal can acquire a tapping response event that matches the double taps within the preset time or the at least three taps within the preset time and the tapping direction information of the double taps within the preset time or the at least three taps within the preset time and matches trigger position information and/or current position information, which further details a searching condition required for the terminal to search for a tapping response event, and can implement more accurate control on the terminal and further improve the capability of the terminal to interact with the user.

### Embodiment 6

To help a person skilled in the art to understand technical solutions of the present invention, the following specific examples are used for illustration of the solutions of the present invention.

A terminal in this embodiment of the present invention may be a terminal including a shock sensor, for example, a smartphone, a palmtop computer, and another electronic device.

The following uses a mobile phone as an example. In this embodiment of the present invention, the mobile phone is equipped with a shock sensor capable of detecting a tapping trigger signal within a preset frequency range. The shock sensor can detect a high frequency signal of at least 200 Hz, and exemplarily, the shock sensor can detect a high frequency signal between 250 Hz and 400 Hz.

Specifically, a tapping action type includes: a single tap, double taps, or successive tapping triggers within a preset time.

### Application scenario 1:

The mobile phone can detect a tapping trigger signal within a preset frequency range by using the shock sensor, identify a tapping action type corresponding to the tapping trigger signal, and then search for a tapping response event that matches the tapping action type, where the tapping trigger signal is generated from a tapping action, detected by the shock sensor, of a user on the terminal.

Exemplarily, if the tapping action type corresponding to the tapping trigger signal that is detected by the mobile phone by using the shock sensor is the single tap within the preset time, the mobile phone may mute the mobile phone; if the tapping action type corresponding to the tapping trigger signal that is detected by the mobile phone by using the shock sensor is the double taps within the preset time, the mobile phone may unlock the mobile phone; if the tapping action type corresponding to the tapping trigger signal that is detected by the mobile phone by using the shock sensor is the at least three taps within the preset time, the mobile phone may power off on the mobile phone.

In the foregoing example, the mobile phone may search a tapping event set prestored in the mobile phone for a tapping response event that matches the identified tapping action type; or the mobile phone may acquire, from a server side by sending an event request message that includes the identified tapping action type to a server, a tapping response event that matches the identified tapping action type. The server may further save, in the server in a form of a tapping event set, a matching relationship that is between a tapping response event and a tapping action type and configured or recorded by the server for the terminal.

Exemplarily, as shown in Table 1, in the tapping event set prestored in the mobile phone or the server, a tapping response event "mute" matches a tapping action type "single tap within a preset time", a tapping response event "unlock" matches a tapping action type "double taps within a preset time", and a tapping response event "power off' matches a tapping action type "at least three taps within a preset time".

**Table 1**

| **Tapping event set** | |
|---|---|
| Tapping action type | Tapping response event |
| Single tap within a preset time | Mute |
| Double taps within a preset time | Unlock |
| ... | ... |
| At least three taps within a preset time | Power off |

It should be noted that after the single tap within the preset time is detected by using the shock sensor, the mobile phone may not only mute the mobile phone, but also execute another tapping response event, for example, an operation such as "light up the screen of the mobile phone" or "turn off the screen of the mobile phone"; accordingly, after the double taps or the at least three taps within the preset time are detected by using the shock sensor, the mobile phone may not only perform "unlock" or "power off" setting on the mobile phone, but also execute another tapping response event.

In this example, a mobile phone can detect a tapping trigger signal within a preset frequency range by using a shock sensor, can acquire an accurate tapping signal, and perform automatic setting on the mobile phone according to a received tapping action type of a user, which can reduce the user's operation of setting the mobile phone in the prior art, implement fast automatic setting of the mobile phone, and improve a capability of the mobile phone to interact with the user.

### Application scenario 2:

The mobile phone can detect a tapping trigger signal within a preset frequency range by using the shock sensor, identify a tapping action type corresponding to the tapping trigger signal, acquire current status information of the mobile phone, and then search for a tapping response event that matches the tapping action type and the current status information of the mobile phone, where the tapping trigger signal is generated from a tapping action, detected by the shock sensor, of a user on the terminal.

The mobile phone can detect the tapping trigger signal within the preset frequency range by using the shock sensor, identify the tapping action type corresponding to the tapping trigger signal, acquire the current status information of the mobile phone, and then search for, according to the tapping action type and the current status information of the mobile phone, the tapping response event that matches the tapping action type and the current status information of the mobile phone.

Specifically, assuming that the current status information of the mobile phone is the same, if tapping trigger signals corresponding to different tapping action types are received, the mobile phone may perform different automatic settings on the mobile phone.

Exemplarily, assuming that the current status information of the mobile phone is an "incoming call" state, if the tapping trigger signals corresponding to different tapping action types are received, the mobile phone may perform different automatic settings on the mobile phone.

When a call is incoming, if the mobile phone detects the single tap of the user within the preset time by using the shock sensor, the mobile phone may mute the mobile phone; when a call is incoming, if the mobile phone detects the double taps of the user within the preset time by using the shock sensor, the mobile phone may enable the mobile phone to reject the incoming call; when a call is incoming, if the mobile phone detects the at least three taps of the user within the preset time by using the shock sensor, the mobile phone may power off automatically.

As shown in Table 2, in the tapping event set in the foregoing example, a tapping response event "mute" matches a tapping action type "single tap within a preset time" plus current status information of the mobile phone "incoming call"; a tapping response event "reject an incoming call" matches a tapping action type "double taps within a preset time" plus the current status information of the mobile phone "incoming call"; and a tapping response event "power off' matches a tapping action type "at least three taps within a preset time" plus the current status information of the mobile phone "incoming call".

**Table 2**

| **Tapping event set** | | | | |
|---|---|---|---|---|
| Tapping response event | | Current status information | | |
| | | Incoming call | ... | Standby |
| Tapping action type | Single tap within a preset time | Mute | ... | Play music |
| | Double taps within a preset time | Reject an incoming call | ... | Enable a camera |
| | ... | ... | ... | ... |
| | At least three taps within a preset time | Power off | ... | Query remaining traffic |

It should be noted that when the current status information of the mobile phone is "incoming call", after the single tap of the user within the preset time is detected by using the shock sensor, the mobile phone may not only mute the mobile phone, but also execute another tapping response event, for example, an operation such as "mute and turn off the screen of the mobile phone" or automatically replying with an SMS message, such as "At a meeting now, reply later"; accordingly, when the current status information of the mobile phone is "incoming call", after two tapping triggers or at least three successive tapping triggers of the user within the preset time are detected by using the shock sensor, the mobile phone may not only perform "reject an incoming call" or "power off" setting on the mobile phone, but also execute another tapping response event.

Specifically, assuming that the current status information of the mobile phone is different, when a tapping trigger signal corresponding to a same tapping action type is received, the mobile phone may perform different automatic settings on the mobile phone.

Exemplarily, assuming that the current status information of the mobile phone is the "incoming call" state, after the single tap of the user within the preset time is detected, the mobile phone may mute the mobile phone; if the current status information of the mobile phone is a "screen locked" state, after the single tap of the user within the preset time is detected, the mobile phone may perform an "unlock" operation on the mobile phone; if the current status information of the mobile phone is an "unlocked" state, after the single tap of the user within the preset time is detected, the mobile phone may perform a "screen locking" operation on the mobile phone.

It should be noted that various trigger types plus various current states of the mobile phone match tapping response events one by one.

In this example, a mobile phone can detect a tapping trigger signal within a preset frequency range by using a shock sensor, acquire an accurate tapping signal, and perform automatic setting on the mobile phone according to a received tapping action type of a user plus a current status of the mobile phone, which can reduce the user's operation of setting the mobile phone in the prior art, implement fast automatic setting of the mobile phone in various states, and improve a capability of a terminal to interact with the user.

### Application scenario 3:

The mobile phone can detect a tapping trigger signal within a preset frequency range by using the shock sensor, identify a tapping action type corresponding to the tapping trigger signal, acquire trigger position information, and then search for a tapping response event that matches the identified tapping action type and the acquired trigger position information, and execute the found tapping response time, where the tapping trigger signal is generated from a tapping action, detected by the shock sensor, of a user on the terminal.

Exemplarily, the trigger position information may be a position of a tapping trigger received by the terminal on the terminal. For example, the trigger position information may be: the tapping trigger being on a front screen of the terminal, the tapping trigger being on a back housing of the terminal, the tapping trigger being on a part above a center of the front screen of the terminal, the tapping trigger being on a part below the center of the front screen of the terminal, the tapping trigger being on a part on the left of the center of the front screen of the terminal, or the tapping trigger being on a part on the right of the center of the front screen of the terminal.

Specifically, assuming that the tapping action types are the same, if the trigger position information is different, the mobile phone may perform different automatic settings on the mobile phone.

Exemplarily, if a single tap of the user within a preset time on the part above the center of the front screen of the mobile phone is detected by using the shock sensor, the mobile phone may raise screen brightness; if a single tap of the user within a preset time on the part below the center of the front screen of the mobile phone is detected by using the shock sensor, the mobile phone may lower screen brightness.

In the tapping event set of the foregoing example, a tapping response event "raise screen brightness" matches a tapping action type "single tap" plus trigger position information "the part above the center of the front screen of the mobile phone"; a tapping response event "lower screen brightness" matches a tapping action type "double tap" plus trigger position information "the part below the center of the front screen of the mobile phone".

It should be noted that after "single tap within a preset time" of the user on "the part above the center of the front screen of the mobile phone" is detected by using the shock sensor, the mobile phone may not only raise the screen brightness, but also execute another tapping response event, for example, an operation such as "enable corresponding application software (for example, enable traffic monitoring software and allocate traffic to a current application program, so as to increase traffic occupancy of the current application program)"; accordingly, when the single tap of the user within the preset time on the part below the center of the front screen of the mobile phone is received, the mobile phone may not only lower the screen brightness, but also execute another tapping response event.

Specifically, assuming that the trigger position information is the same, if the tapping action types are different, the mobile phone may perform different automatic settings on the mobile phone.

Exemplarily, if the single tap of the user within the preset time on the part above the center of the front screen of the mobile phone is detected by using the shock sensor, the mobile phone may raise the screen brightness; if the double taps of the user within the preset time on the part above the center of the front screen of the mobile phone is detected by using the shock sensor, the mobile phone may raise volume of the mobile phone; if the single tap of the user within the preset time on the part below the center of the front screen of the mobile phone is detected by using the shock sensor, the mobile phone may lower the screen brightness; if the double taps of the user within the preset time on the part below the center of the front screen of the mobile phone is detected by using the shock sensor, the mobile phone may lower volume of the mobile phone.

It should be noted that various trigger types plus various trigger position information match tapping response events one by one.

In this example, a mobile phone can detect a tapping trigger signal within a preset frequency range by using a shock sensor, acquire an accurate tapping signal, and perform automatic setting on the mobile phone according to a received tapping action type of a user plus a current state of the mobile phone, which can reduce the user's operation of setting the mobile phone in the prior art and improve a capability of a terminal to interact with the user.

### Application scenario 4:

The mobile phone can detect a tapping trigger signal within a preset frequency range by using the shock sensor, acquire a tapping action type, current status information of the mobile phone, and trigger position information, and then search a tapping event set for a tapping response event according to the tapping action type, the current status information of the mobile phone, and the trigger position information, where the tapping response event matches the tapping action type, the current status information of the mobile phone, and the trigger position information.

Exemplarily, when a current state of the mobile phone is a "music playing" state, if the mobile phone detects the single tap of the user within the preset time on a part above a center of a front screen of the mobile phone by using the shock sensor, the mobile phone may raise volume in which the mobile phone plays music; when the current state of the mobile phone is the "music playing" state, if the mobile phone detects the single tap of the user within the preset time on a part below the center of the front screen of the mobile phone by using the shock sensor, the mobile phone may lower the volume in which the mobile phone plays music. If the mobile phone detects the single tap of the user within the preset time on a part on the left of the center of the front screen of the mobile phone by using the shock sensor, the mobile phone plays a previous song; when the current state of the mobile phone is the "music playing" state, if the mobile phone detects the single tap of the user within the preset time on a part on the right of the center of the front screen of the mobile phone by using the shock sensor, the mobile phone may play a next song.

When the mobile phone is currently in a "left-hand input interface of an information input interface" state, if the mobile phone detects the single tap of the user within the preset time on the part on the right of the center of the front screen of the mobile phone by using the shock sensor, the mobile phone may switch "information input interface" to "right-hand input interface"; when the mobile phone is currently in a "right-hand input interface of an information input interface" state, if the mobile phone detects the single tap of the user within the preset time on the part on the left of the center of the front screen of the mobile phone by using the shock sensor, the mobile phone may switch "information input interface" to "left-hand input interface".

When the mobile phone is currently in a "picture viewing" state, if the mobile phone detects the single tap of the user within the preset time on the part above the center of the front screen of the mobile phone by using the shock sensor, the mobile phone displays a previous picture; when the mobile phone is currently in the "picture viewing" state, if the mobile phone detects the single tap of the user within the preset time on the part below the center of the front screen of the mobile phone by using the shock sensor, the mobile phone displays a next picture.

It should be noted that, that the mobile phone searches the tapping event set for a tapping response event according to the tapping action type, the current status information of the mobile phone, and the trigger position information includes but is not limited to the method in the foregoing example. For example, when the mobile phone is currently in a "capturing with a rear camera" state, if the mobile phone detects the single tap of the user within the preset time on the part above the center of the front screen of the mobile phone by using the shock sensor, the mobile phone switches a capturing mode to "mode of capturing with a front camera"; when the mobile phone is currently in a "capturing with a front camera" state, if the mobile phone receives the single tap of the user within the preset time on the part below the center of the front screen of the mobile phone, the mobile phone switches the capturing mode to "mode of capturing with a rear camera". Another method in which the mobile phone searches the tapping event set for the tapping response event according to the tapping action type, the current status information of the mobile phone, and trigger position information of a tapping trigger is not described again in this embodiment of the present invention.

It should be noted that various trigger types plus various current status information of the mobile phone and various trigger position information of tapping triggers match tapping response events one by one. A matching relationship between a tapping response event and a tapping action type, current status information of the mobile phone, plus trigger position information of a tapping trigger is a fixed preconfiguration made by a system or is prerecorded according to a personal operation preference of the user.

In this example, a mobile phone can detect a tapping trigger signal within a preset frequency range by using a shock sensor, acquire an accurate tapping signal, and perform automatic setting on the mobile phone according to a received tapping action type of a user plus a current state of the mobile phone and various trigger position information of tapping triggers, which can reduce the user's operation of setting the mobile phone in the prior art, implement fast automatic setting of the mobile phone in various states, and improve user experience.

### Application scenario 5:

In this embodiment of the present invention, if the tapping action type is the at least three taps within the preset time, after acquiring the tapping action type, the mobile phone may acquire tapping frequency information of a tapping trigger and tapping frequency variation information, and search a tapping event set for a tapping response event according to the tapping frequency information of the tapping trigger.

Exemplarily, if the tapping action type is the at least three taps within the preset time, various tapping frequency information matches various tapping response events in the tapping event set.

For example, if it is assumed that at least three tapping triggers within the preset time are specifically tapping the mobile phone four times within the preset time, that is, three tapping intervals, the mobile phone may determine whether a time interval between two successive taps exceeds a preset threshold, so as to generate a corresponding instruction, and then correspond to various tapping response events according to various combinations of instructions. For example, "1" indicates that the time interval is greater than the preset threshold, and "0" indicates that the time interval is less than the preset threshold. Therefore, the mobile phone may generate instructions such as "100", "101", "110", "001", and "001" according to the tapping frequency information of the taps of the user on the mobile phone, and search the tapping event set for a tapping response event that matches the four taps within the preset time and matches the tapping frequency information of the tapping triggers.

It should be noted that in this example, the tapping response event may be: switching the mobile phone from a first state to a second state, or invoking, by the mobile phone, an application that matches the tapping action type.

In this example, a mobile phone can detect a tapping trigger signal within a preset frequency range by using a shock sensor, can acquire an accurate tapping signal, and perform automatic setting on the mobile phone according to an identified tapping action type of a user plus tapping frequency information of a tapping trigger, which can reduce the user's operation of setting the mobile phone in the prior art and improve a capability of a terminal to interact with the user.

### Application scenario 6:

In this example, that the mobile phone searches a tapping event set for a tapping response event according to the tapping action type may specifically include: the mobile phone searches the tapping event set for the tapping response event according to the tapping action type and tapping frequency information of a tapping trigger plus at least one of trigger position information of the tapping trigger and current status information of the terminal.

Specifically, for a method in which the mobile phone searches the tapping event set for the tapping response event according to the tapping action type and the tapping frequency information of the tapping trigger plus at least one of the trigger position information of the tapping trigger and the current status information of the terminal, reference may be made to a related description in the foregoing application scenario, and details are not described again in this application scenario.

The tapping event set includes at least one of the tapping response events, and a matching relationship between a tapping response event and the tapping action type plus at least one of the current status information of the terminal, the trigger position information of the tapping trigger, and the tapping frequency information of the tapping trigger is preconfigured by a server for the mobile phone.

Further, the at least three taps within the preset time may be directionally successive tapping triggers within the preset time.

Exemplarily, when a current state of the mobile phone is a "music playing" state, if the mobile phone receives the at least three taps of the user within the preset time from top to bottom on a front screen of the mobile phone, the mobile phone may raise volume in which the mobile phone plays music; exemplarily, when the current state of the mobile phone is the "music playing" state, if the mobile phone receives the at least three taps of the user within the preset time from bottom to top on the front screen of the mobile phone, the mobile phone may lower the volume in which the mobile phone plays music.

Exemplarily, when the current state of the mobile phone is the "music playing" state, if the mobile phone receives the at least three taps of the user within the preset time from top to bottom on the front screen of the mobile phone, the mobile phone plays a previous song; when the current state of the mobile phone is the "music playing" state, if the mobile phone receives the at least three taps of the user within the preset time from bottom to top on the front screen of the mobile phone, the mobile phone may play a next song.

It should be noted that a method in which the mobile phone acquires and executes a corresponding tapping response event according to directionality of the at least three tapping triggers within the preset time includes but is not limited to the method listed above, and details about another tapping control method are not described again in this embodiment of the present invention.

In this example, a mobile phone can detect a tapping trigger signal within a preset frequency range by using a shock sensor, can acquire an accurate tapping signal, and perform automatic setting on the mobile phone according to a received tapping action type of a user plus tapping frequency information of a tapping trigger and directionality of successive tapping triggers, which can reduce the user's operation of setting the mobile phone in the prior art and improve a capability of a terminal to interact with the user.

### Embodiment 7

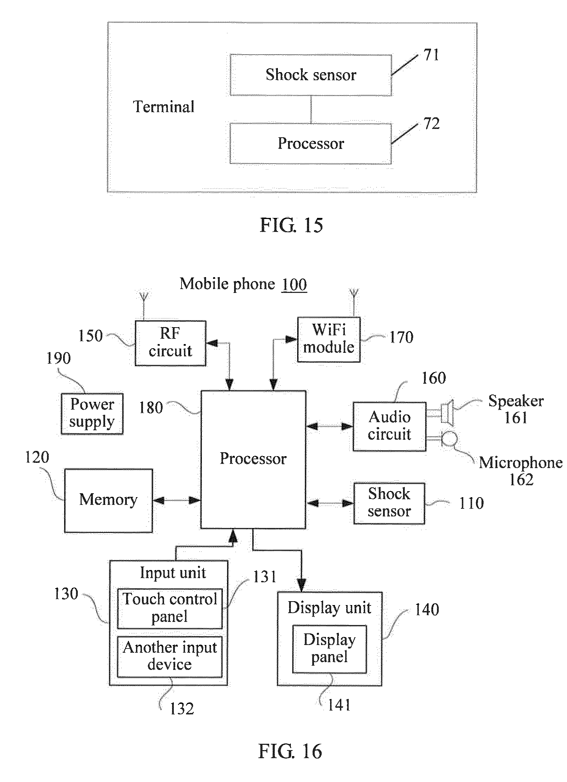

This embodiment of the present invention further provides a terminal, and as shown in FIG. 15, the terminal includes: a shock sensor 71 and a processor 72.

The shock sensor 71 is configured to detect a tapping trigger signal within a preset frequency range.

The processor 72 is configured to: after the shock sensor 31 detects the tapping trigger signal, identify a tapping action type corresponding to the tapping trigger signal; acquire a tapping response event that matches the identified tapping action type; and execute the tapping response event.

It should be noted that in this embodiment of the present invention, after the processor 72 acquires the tapping response event that matches the tapping action type, the processor 72 may directly execute the acquired tapping response event; alternatively, after acquiring the tapping response event that matches the tapping action type, the processor 72 may control a hardware module corresponding to the acquired tapping response event to execute the tapping response event.

Further, in a first application scenario of this embodiment of the present invention, the processor 72 is further configured to: after the shock sensor 31 detects the tapping trigger signal, acquire current status information of the terminal.

In the first application scenario of this embodiment, the processor 72 is further configured to search for a tapping response event that matches the identified tapping action type and matches the acquired current status information.

Further, in a second application scenario of this embodiment of the present invention, the processor 72 is further configured to: after the shock sensor 31 detects the tapping trigger signal, acquire trigger position information of the tapping trigger signal that is detected by using the shock sensor.

In the second application scenario of this embodiment, the processor 72 is further configured to search for a tapping response event that matches the identified tapping action type and matches the acquired trigger position information.

Further, in a third application scenario of this embodiment of the present invention, the processor 72 is further configured to: after the shock sensor 31 detects the tapping trigger signal, acquire current status information of the terminal and trigger position information of the tapping trigger signal that is detected by the shock sensor.

In the third application scenario of this embodiment, the processor 72 is further configured to search for a tapping response event that matches the identified tapping action type and matches the acquired current status information and the acquired trigger position information.

It should be noted that the tapping action type in this embodiment of the present invention may include: a single tap within a preset time, double taps within a preset time, or at least three taps within a preset time.

Further, in a fourth application scenario of this embodiment of the present invention, the processor 72 is further configured to: if it is identified that the tapping action type is the at least three taps within the preset time, after identifying the tapping action type corresponding to the tapping trigger signal, acquire tapping frequency information of the at least three taps within the preset time that are detected by the shock sensor.

In the fourth application scenario of this embodiment, the processor 72 is further configured to search for a tapping response event that matches the at least three taps within the preset time and matches the acquired tapping frequency information.

Further, in a fifth application scenario of this embodiment of the present invention, the processor 72 is further configured to: if it is identified that the tapping action type is the at least three taps within the preset time, after identifying the tapping action type corresponding to the tapping trigger signal, acquire tapping frequency information of the at least three taps within the preset time that are detected by the shock sensor.

In the fifth application scenario of this embodiment, the processor 72 is further configured to search for a tapping response event that matches the at least three taps within the preset time and matches the acquired tapping frequency information and acquired current status information.

Further, in a sixth application scenario of this embodiment of the present invention, the processor 72 is further configured to: if it is identified that the tapping action type is the at least three taps within the preset time, after identifying the tapping action type corresponding to the tapping trigger signal, acquire tapping frequency information of the at least three taps within the preset time that are detected by the shock sensor.

In the sixth application scenario of this embodiment, the processor 72 is further configured to search for a tapping response event that matches the at least three taps within the preset time and matches the acquired tapping frequency information and acquired trigger position information.

Further, in a seventh application scenario of this embodiment of the present invention, the processor 72 is further configured to: if it is identified that the tapping action type is the at least three taps within the preset time, after identifying the tapping action type corresponding to the tapping trigger signal, acquire tapping frequency information of the at least three taps within the preset time that are detected by the shock sensor.

In the seventh application scenario of this embodiment, the processor 72 is further configured to search for a tapping response event that matches the at least three taps within the preset time and matches the acquired tapping frequency information, acquired trigger position information, and acquired current status information.

Further, in an eighth application scenario of this embodiment of the present invention, the processor 72 is further configured to: if it is identified that the tapping action type is the at least three taps within the preset time, after identifying the tapping trigger signal is detected and the tapping action type corresponding to the tapping trigger signal, acquire tapping direction information of the at least three taps within the preset time that are detected by the shock sensor.

In the eighth application scenario of this embodiment, the processor 72 is further configured to search for a tapping response event that matches the at least three taps within the preset time and matches the acquired tapping direction information.

Further, in a ninth application scenario of this embodiment of the present invention, the processor 72 is further configured to: if it is identified that the tapping action type is the at least three taps within the preset time, after the tapping trigger signal is detected and the tapping action type corresponding to the tapping trigger signal is identified, acquire tapping direction information of the at least three taps within the preset time that are detected by the shock sensor and tapping frequency information of the at least three taps within the preset time that are detected by the shock sensor.

In the ninth application scenario of this embodiment, the processor 72 is further configured to search for a tapping response event that matches the at least three taps within the preset time and matches the acquired tapping direction information and the acquired tapping frequency information.

Further, in a tenth application scenario of this embodiment of the present invention, the processor 72 is further configured to: if it is identified that the tapping action type is the at least three taps within the preset time, after the tapping trigger signal is detected and the tapping action type corresponding to the tapping trigger signal is identified, acquire tapping frequency information and tapping direction information of the at least three taps within the preset time that are detected by the shock sensor and current status information of the terminal.

In the tenth application scenario of this embodiment, the processor 72 is further configured to search for a tapping response event that matches the at least three taps within the preset time and matches the acquired tapping frequency information, the acquired tapping direction information, and the acquired current status information.

Further, in an eleventh application scenario of this embodiment of the present invention, the processor 72 is further configured to: if it is identified that the tapping action type is the at least three taps within the preset time, after identifying the tapping action type corresponding to the tapping trigger signal, acquire tapping direction information of the double taps within the preset time that are detected by the shock sensor.

In the eleventh application scenario of this embodiment, the processor 72 is further configured to search for a tapping response event that matches the double taps within the preset time and matches the acquired tapping direction information.

Further, in a twelfth application scenario of this embodiment of the present invention, the processor 72 is further configured to: if it is identified that the tapping action type is the at least three taps within the preset time, after identifying the tapping action type corresponding to the tapping trigger signal, acquire tapping direction information of the double taps within the preset time that are detected by the shock sensor and current status information of the terminal.

In the twelfth application scenario of this embodiment, the processor 72 is further configured to search for a tapping response event that matches the double taps within the preset time and matches the acquired tapping direction information and the acquired current status information.

It should be noted that for specific descriptions of some functional modules in the terminal provided in this embodiment of the present invention, reference may be made to corresponding content in the method embodiments of the present invention, and details are not described again in this embodiment.

The terminal provided in this embodiment of the present invention can detect a tapping trigger signal within a preset frequency range by using a shock sensor; after the tapping trigger signal is detected, identify a tapping action type corresponding to the tapping trigger signal; acquire a tapping response event that matches the identified tapping action type; and execute the tapping response event. Compared with the prior art, because the shock sensor can detect the tapping trigger signal within the preset frequency range, a problem is avoided that frequent automatic setting of the terminal is caused due to a trigger signal out of the preset frequency range detected by the terminal (for example, the terminal detects a trigger signal generated from an unconscious shaking operation of a user during walking), thereby implementing accurate operation control on the terminal and improving a capability of the terminal to interact with the user.

Exemplarily, the terminal may be any one of devices such as a mobile phone, a tablet computer, a PDA, a POS, a vehicle-mounted computer, and a wearable device.

That the mobile terminal is a mobile phone is used as an example. FIG. 16 is a block diagram of a part of a structure of a mobile phone 100 related to an embodiment of the present invention.

As shown in FIG. 16, the mobile phone 100 may include: a shock sensor 110, a memory 120, an input unit 130, a display unit 140, a radio frequency (Radio Frequency, RF) circuit 150, an audio circuit 160, a WiFi (wireless fidelity, Wireless Fidelity) module 170, a processor 180, a power supply 190, and other parts. A person skilled in the art may understand that the structure of the mobile phone shown in FIG. 16 does not constitute any limitation on the mobile phone, and instead, the mobile phone may include fewer or more parts than those shown in FIG. 16, or a combination of some parts, or parts disposed differently.

The following describes the constituent parts of the mobile phone 100 in detail with reference to FIG. 16.

The shock sensor 110 may be configured to detect a tapping trigger signal within a preset frequency range. Specifically, a frequency range of a signal that can be collected by the shock sensor (Shock Sensor) is generally between 250 Hz and 400 Hz.

The processor 180 is a control center of the mobile phone 100, is connected to various parts of the entire mobile phone by using various interfaces and lines, and implements various functions of the mobile phone 100 and processes data by running or executing a software program and/or a module stored in the memory 120 and invoking data stored in the memory 120, so as to perform overall monitoring on the mobile phone. Optionally, the processor 180 may include one or more processing units, and preferably, the processor 180 may be integrated with an application processor and a modem processor, where the application processor mainly processes an operating system, a user interface, an application program, and the like, and the modem processor mainly processes wireless communication. It may be understood that the foregoing modem processor may also not be integrated into the processor 180.

Specifically, in this embodiment of the present invention, after the shock sensor 110 detects a tapping trigger signal, the processor 180 may directly identify a tapping action type corresponding to the tapping trigger signal or invoke another functional module to identify a tapping action type corresponding to the tapping trigger signal, acquire a tapping response event that matches the identified tapping action type, and execute the tapping response event or invoke another functional module to execute the tapping response event. For example, the processor 180 may invoke an audio output module to adjust (lower or raise) audio output volume.

The RF circuit 110 may be configured to: receive and send information or receive and send a signal in a call process. Particularly, after receiving downlink information of a base station, the RF circuit 110 sends the downlink information to the processor 180 for processing; in addition, the RF circuit 110 sends uplink data of the design to the base station. Generally, the RF circuit includes but is not limited to an antenna, at least one amplifier, a transceiver, a coupler, an LNA (Low Noise Amplifier, low noise amplifier), a duplexer, and the like. Moreover, the RF circuit 110 may further communicate with a network and another device by means of wireless communication. Any communication standard or protocol may be used for the wireless communication, including without a limitation to GSM (Global System of Mobile communication, Global System for Mobile Communications), GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), email, SMS (Short Messaging Service, short message service), and the like.

The memory 120 may be configured to store a software program and a module, and the processor 180 runs the software program and the module stored in the memory 120, so as to implement various functional applications of the mobile phone 100 and process data. The memory 120 may mainly include a program storage area and a data storage area, where the program storage area may store an operating system, an application program required by at least one function (for example, a sound playback function and an image display function), and the like; the data storage area may store data (for example, audio data and a phone book) and the like that are created according to usage of the mobile phone 100. Moreover, the memory 120 may include a high-speed random access memory, and may further include a non-volatile memory, for example, at least one disk storage component, a flash memory component, or another volatile solid state storage component.

Specifically, in this embodiment of the present invention, the memory 120 may be specifically configured to store a tapping event set that is configured by a server for the mobile phone.

The input unit 130 may be configured to: receive digital or character information that is input, and generate a key signal input related to user setting and function control of the mobile phone 100. Specifically, the input unit 130 may include a touch control panel 131 and another input device 132. The touch control panel 131, also referred to as a touchscreen, can collect a touch operation of a user on or around the touch control panel 131 (for example, an operation performed on the touch control panel 131 or around the touch control panel 131 by a user by using a finger, a stylus, or any proper object or accessory) and drive a corresponding connected apparatus according to a preset program. Optionally, the touch control panel 131 may include two parts: a touch detection apparatus and a touch controller. The touch detection apparatus detects a touch orientation of the user, detects a signal generated from the touch operation, and sends the signal to the touch controller; and the touch controller receives touch information from the touch detection apparatus, converts the touch information into touch point coordinates, sends the touch point coordinates to the processor 180, and can receive and execute a command sent by the processor 180. Moreover, the touch control panel 131 may be implemented in multiple types such as resistive, capacitive, infrared, and surface acoustic waves. In addition to the touch control panel 131, the input unit 130 may further include the another input device 132. Specifically, the another input device 132 may include but is not limited to one or more of a physical keyboard, a function button (for example, a volume control button and an on/off button), a trackball, a mouse, a joystick, and the like.

The display unit 140 may be configured to display information input by the user or information provided for the user, and various menus of the mobile phone 100. The display unit 140 may include a display panel 141, and optionally, the display panel 141 may be configured in a form of an LCD (Liquid Crystal Display, liquid crystal display), an OLED (Organic Light-Emitting Diode, organic light-emitting diode), and the like. Further, the touch control panel 131 may cover the display panel 141, and when a touch operation on or around the touch control panel 131 is detected, the touch control panel 131 delivers the touch operation to the processor 180 to determine a type of a touch event, and then the processor 180 provides a corresponding visual output on the display panel 141 according to the type of the touch event. Although in FIG. 1, the touch control panel 131 and the display panel 141 implement input and input functions of the mobile phone 100 as two independent parts, the touch control panel 131 and the display panel 141 may be integrated to implement the input and output functions of the mobile phone 100 in some embodiments.

The audio circuit 160, a speaker 161, and a microphone 162 may provide an audio interface between the user and the mobile phone 100. The audio circuit 160 can transmit an electrical signal converted from received audio data to the speaker 161, and the electrical signal is converted into a sound signal by the speaker 161 for output; meanwhile, the microphone 162 converts a collected sound signal into an electrical signal, and the audio circuit 160 receives the electrical signal, converts the electrical signal into audio data and then outputs the audio data to the RF circuit 108 to send the audio data to, for example, another mobile phone, or outputs the audio data to the memory 120 for further processing.

WiFi belongs to a short-range wireless transmission technology. By using the WiFi module 170, the mobile phone 100 can help the user to receive and send an email, browse a webpage, access streaming media, and the like, and the WiFi module 170 provides wireless broadband Internet access for the user. Although FIG. 1 shows the WiFi module 170, it may be understood that the WiFi module 170 is not a necessary constituent of the mobile phone 100 and may be omitted completely as required without changing the essence of the present invention.

The mobile phone 100 further includes the power supply 190 (for example, a battery) that supplies power to various parts. Preferably, the power supply may be logically connected to the processor 180 by using a power management system, so as to implement functions such as charging, discharging, and power consumption management by using the power management system.

Although not shown, a camera, a Bluetooth module, and the like may further be included in the mobile phone 100, and details are not described herein again.

The foregoing descriptions about implementation manners allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A tapping control method, which is applied to a terminal, wherein the terminal comprises a shock sensor, and the method comprises:
detecting, by using the shock sensor, a tapping trigger signal within a preset frequency range;
after the tapping trigger signal is detected, identifying a tapping action type corresponding to the tapping trigger signal;
acquiring a tapping response event that matches the identified tapping action type; and
executing the tapping response event.

2. The tapping control method according to claim 1, wherein after the tapping trigger signal is detected, the method further comprises:
acquiring current status information of the terminal; and
the acquiring a tapping response event that matches the identified tapping action type comprises:
searching for a tapping response event that matches the identified tapping action type and matches the acquired current status information.

3. The tapping control method according to claim 1, wherein after the tapping trigger signal is detected, the method further comprises:
acquiring trigger position information of the tapping trigger signal that is detected by using the shock sensor; and
the acquiring a tapping response event that matches the identified tapping action type comprises:
searching for a tapping response event that matches the identified tapping action type and matches the acquired trigger position information.

4. The tapping control method according to claim 1, wherein after the tapping trigger signal is detected, the method further comprises:
acquiring current status information of the terminal and trigger position information of the tapping trigger signal that is detected by the shock sensor; and
the acquiring a tapping response event that matches the identified tapping action type comprises:
searching for a tapping response event that matches the identified tapping action type and matches the acquired current status information and the acquired trigger position information.

5. The tapping control method according to claim 1, wherein the tapping action type comprises: a single tap within a preset time, double taps within a preset time, or at least three taps within a preset time.

6. The tapping control method according to claim 5, wherein if it is identified that the tapping action type is the at least three taps within the preset time, after the tapping action type corresponding to the tapping trigger signal is identified, the method further comprises:
acquiring tapping frequency information of the at least three taps within the preset time that are detected by the shock sensor; and
the acquiring a tapping response event that matches the identified tapping action type comprises:
searching for a tapping response event that matches the at least three taps within the preset time and matches the acquired tapping frequency information.

7. A terminal, comprising:
a shock sensor, configured to detect a tapping trigger signal within a preset frequency range; and
a processor, configured to: after the shock sensor detects the tapping trigger signal, identify a tapping action type corresponding to the tapping trigger signal; acquire a tapping response event that matches the identified tapping action type; and execute the tapping response event.

8. The terminal according to claim 7, wherein the processor is further configured to: after the tapping trigger signal is detected, acquire current status information of the terminal; and
the processor is further configured to search for a tapping response event that matches the identified tapping action type and matches the acquired current status information.

9. The terminal according to claim 7, wherein the processor is further configured to: after the tapping trigger signal is detected, acquire trigger position information of the tapping trigger signal that is detected by using the shock sensor; and
the processor is further configured to search for a tapping response event that matches the identified tapping action type and matches the acquired trigger position information.

10. The terminal according to claim 7, wherein the processor is further configured to: after the tapping trigger signal is detected, acquire current status information of the terminal and trigger position information of the tapping trigger signal that is detected by the shock sensor; and
the processor is further configured to search for a tapping response event that matches the identified tapping action type and matches the acquired current status information and the acquired trigger position information.

11. The terminal according to claim 7, wherein the tapping action type comprises:
a single tap within a preset time, double taps within a preset time, or at least three taps within a preset time.

12. The terminal according to claim 10, wherein the processor is further configured to: if it is identified that the tapping action type is the at least three taps within the preset time, after identifying the tapping action type corresponding to the tapping trigger signal, acquire tapping frequency information of the at least three taps within the preset time that are detected by the shock sensor; and
the processor is further configured to search for a tapping response event that matches the at least three taps within the preset time and matches the acquired tapping frequency information.
